# EUROPÄISCHE PATENTSCHRIFT

(11) **EP 3 561 228 B1**
(45) Veröffentlichungstag und Bekanntmachung des Hinweises auf die Patenterteilung: **21.07.2021**
(21) Anmeldenummer: 19169174.0
(22) Anmeldetag: 15.04.2019
(51) Int. Cl.: F01D 5/14

(54) **SCHAUFEL, SCHAUFELSEGMENT UND BAUGRUPPE FÜR EINE TURBOMASCHINE UND TURBOMASCHINE**
TURBOMACHINE AND BLADE, BLADE SEGMENT AND ASSEMBLY FOR A TURBOMACHINE
AUBE, SEGMENT D'AUBE ET MODULE POUR UNE TURBOMACHINE ET TURBOMACHINE

(30) Priorität: 27.04.2018 DE 102018206601
(43) Veröffentlichungstag der Anmeldung: 30.10.2019
(73) Patentinhaber: MTU Aero Engines AG, 80995 München (DE)
(72) Erfinder: Klingels, Hermann, 85221 Dachau (DE)

(56) Entgegenhaltungen:
- EP-A1- 0 978 633
- EP-A1- 3 037 674
- DE-A1- 1 428 110
- DE-A1- 2 135 287
- US-A- 4 128 363
- US-A- 5 112 187

## Beschreibung

Die vorliegende Erfindung betrifft eine Schaufel für eine Turbomaschine, insbesondere eine Laufschaufel oder eine Leitschaufel, insbesondere für eine Gasturbine, insbesondere eines Flugtriebwerks, insbesondere für eine Turbinenstufe einer Gasturbine, insbesondere für eine Niederdruckturbine oder für eine Hochdruckturbine, wobei die Schaufel ein Schaufelblatt mit einem Schaufelblattprofil und einem radial inneren Schaufelblattende und einem radial äußeren Schaufelblattende aufweist.

Ferner betrifft die Erfindung ein Schaufelsegment für eine Turbomaschine, insbesondere ein Laufschaufelsegment oder ein Leitschaufelsegment für eine vorbeschriebene Turbomaschine, wobei das Schaufelsegment wenigstens ein erstes, einen Strömungskanal begrenzendes Wandsegment, insbesondere ein Deckbandsegment oder ein Ringsegment, und wenigstens eine Schaufel mit einem Schaufelblatt mit einem Schaufelblattprofil und einem radial inneren Schaufelblattende und einem radial äußeren Schaufelblattende aufweist.

Des Weiteren betrifft die Erfindung eine Baugruppe für eine Turbomaschine, insbesondere ein Leitgitter oder einen Stator oder ein Laufgitter oder einen Rotor, für eine vorbeschriebene Turbomaschine.

Darüber hinaus betrifft die Erfindung eine Turbomaschine, insbesondere eine Gasturbine, mit wenigstens einer Verdichter- oder Turbinenstufe.

Der strömungstechnischen Ausgestaltung der einzelnen Komponenten einer Turbomaschine, insbesondere der Schaufeln sowie den angrenzenden und einen Strömungskanal begrenzenden Bauteilen bzw. Bereichen, kommt dabei eine erhebliche Bedeutung zu, insbesondere im Hinblick auf einen mit der Turbomaschine erreichbaren Wirkungsgrad.

Aus dem Stand der Technik ist eine Vielzahl an strömungstechnisch vorteilhaften Ausgestaltungen für die einzelnen Komponenten von gattungsgemäßen Turbomaschinen bekannt, beispielsweise aus der EP 2 194 232 A2, der EP 2 576 987 B1 sowie der DE 10 2006 057 063 B3, welche jeweils konstruktive Ausgestaltungen zur Strömungsoptimierung offenbaren, insbesondere zur Verringerung von Strömungsverlusten im Bereich der Schaufelblattenden. Weitere Ausgestaltungen sind aus den Dokumenten DE2135287A1 und EP0978633A1 bekannt.

Eine Aufgabe einer Ausführung der vorliegenden Erfindung ist es, eine veränderte, insbesondere verbesserte, Strömung in einer Turbomaschine zu erreichen, insbesondere eine weniger verlustbehaftete Durchströmung, insbesondere im Bereich des Schaufelblattes, vor allem im Bereich der Schaufelblattenden.

Diese Aufgabe wird durch eine Schaufel mit den Merkmalen des Anspruchs 1, durch ein Schaufelsegment mit den Merkmalen von Anspruch 8, durch eine Baugruppe gemäß Anspruch 12 sowie durch eine Turbomaschine gemäß Anspruch 13 gelöst. Vorteilhafte Ausführungsformen der Erfindung sind Gegenstand der Unteransprüche.

Gemäß der vorliegenden Erfindung weist eine Schaufel für eine Turbomaschine, insbesondere eine Laufschaufel oder eine Leitschaufel, welche insbesondere für eine Gasturbine ausgebildet ist, insbesondere für eine Turbinenstufe einer Gasturbine, insbesondere für eine Niederdruckturbine oder für eine Hochdruckturbine, ein Schaufelblatt mit einem Schaufelblattprofil und einem radial inneren Schaufelblattende und einem radial äußeren Schaufelblattende auf.

Erfindungsgemäß weist die Schaufel, insbesondere das Schaufelblatt, zusätzlich zum Schaufelblattprofil wenigstens ein im Bereich des radial inneren und/oder des radial äußeren Schaufelblattendes und in radialer Richtung beabstandet zum zugehörigen Schaufelblattende angeordnetes und sich wenigstens teilweise in axialer Richtung, insbesondere in axialer Richtung, und wenigstens teilweise in Umfangsrichtung und/oder wenigstens teilweise in tangentialer Richtung, insbesondere in Umfangsrichtung und/oder insbesondere in tangentialer Richtung erstreckendes erstes Leitprofil auf.

Hierdurch kann eine besonders vorteilhafte Beeinflussung der Strömung im Bereich des zugehörigen Schaufelblattendes erreicht werden und Strömungsverluste können reduziert werden.

Die Richtungsangabe "axial" bezieht sich vorliegend jeweils in fachüblicher Weise auf eine Richtung parallel zur Rotations- bzw. (Haupt)Maschinenachse der Turbomaschine, die Richtungsangabe "Umfangsrichtung" entsprechend auf eine Rotationsrichtung um diese Rotations- bzw. (Haupt)Maschinenachse, die Richtungsangabe "radial" auf eine Richtung, die senkrecht auf der axialen und Umfangsrichtung steht. Die Richtungsangabe "tangential" bezieht sich entsprechend auf eine Richtung, welche senkrecht auf der axialen Richtung und der radialen Richtung steht.

Sämtliche Richtungsangaben beziehen sich dabei vorliegend jeweils auf einen in einer Turbomaschine eingebauten Zustand der einzelnen Bauteile bzw. im Zusammenhang mit einer Turbomaschine auf einen funktionsgemäßen Verwendungszustand.

Der Ausdruck "wenigstens teilweise" im Zusammenhang mit einer Richtungsangabe bedeutet dabei, dass der zugehörige resultierende Richtungsvektor einen Anteil der nach dem Ausdruck "wenigstens teilweise" angegebenen Richtung aufweist.

Unter einem "Schaufelblatt" im Sinne der Erfindung wird dabei vorliegend der strömungsrelevante Bereich einer Schaufel verstanden.

Unter dem Begriff "Profil" wird vorliegend ein wenigstens zweiseitig, insbesondere mehrseitig, umströmter und/oder umströmbarer Körper verstanden, beispielsweise ein Schaufelblatt.

Mit dem Begriff "Schaufelblattprofil" wird vorliegend derjenige Teil des Schaufelblattes bezeichnet, der als Profil ausgebildet ist, d.h. wenigstens zweiseitig umströmt wird und/oder umströmbar ist, und über welchen Strömungsenergie umgesetzt werden kann und/oder wird.

Mit dem Begriff "Leitprofil" wird vorliegend ein Profil oder Profilabschnitt bezeichnet, welches zur Beeinflussung einer Strömung ausgebildet ist, insbesondere zum definierten Beeinflussen einer Strömung, insbesondere zum definierten Leiten und/oder Umleiten einer Strömung.

Als "Profilvorderkante" wird vorliegend eine weiter stromaufwärts liegende Kante verstanden, insbesondere die Anströmkante, während als "Profilhinterkante" eine weiter stromabwärts liegende Kante bezeichnet wird.

Unter dem Begriff "Hauptprofil" wird vorliegend ein Profilabschnitt eines Schaufelblattprofils eines Schaufelblattes verstanden, insbesondere ein Profilabschnitt über den bevorzugt mehr als 80%, insbesondere mehr als 90%, des Massestroms umgesetzt werden können und/oder werden.

Entsprechend wird und dem Begriff "Nebenprofil" vorliegend ein Profilabschnitt eines Schaufelblattprofils eines Schaufelblattes bezeichnet, über welchen nur ein geringer Teil der Strömungsenergie umgesetzt wird und/oder werden kann, insbesondere ein Profilabschnitt eines Schaufelblattes, über den bevorzugt weniger als 20%, insbesondere weniger als 10%, des Massestroms umgesetzt werden können und/oder werden. Insbesondere bezeichnet der Begriff "Nebenprofil" vorliegend einen Profilabschnitt eines Schaufelblattes, welcher nur von einer Randströmung umströmt wird und/oder umströmbar ist.

Mit dem Begriff "Wand" wird vorliegend hingegen insbesondere eine Fläche eines nur einseitig angeströmten und/oder umströmten und/oder anströmbaren und/oder umströmbaren Körpers bezeichnet.

Als "radial inneres Schaufelblattende" wird vorliegend das in einem funktionsgemäßen Einbauzustand der Schaufel in einer Turbomaschine in radialer Richtung weiter innenliegende Schaufelblattende verstanden. Als "radial äußeres" Schaufelblattende entsprechend das sich in einem funktionsgemäßen Einbauzustand der Schaufel in einer Turbomaschine in radialer Richtung weiter außen befindende Schaufelblattende.

Bei der Arbeitsumsetzung in Strömungsmaschinen wie Turbomaschinen entstehen durch Strömungsvorgänge Verluste, sogenannte Strömungsverluste, welche sich grundsätzlich in Profilverluste, Wandverluste und Spaltverluste unterteilen lassen, wobei die genannten Verlustmechanismen in der Regel nicht unabhängig voneinander auftreten. Strömungsverluste entstehen beispielsweise durch viskose Effekte in Grenzschichten, bei Mischungsvorgängen, bei Verdichtungsstößen sowie bei der Wärmeübertragung.

Vorliegend werden unter "Profilverlusten" insbesondere die Verluste verstanden, die durch die endliche Dicke der Schaufelhinterkanten entstehen sowie Strömungsverluste, welche in Grenzschichten an den Schaufelprofilen einer Strömungsmaschine aufgrund viskoser Reibung, turbulenter Dissipation und durch Stöße in der Schaufelpassage entstehen. In Niederdruckturbinen machen aufgrund der dort auftretenden großen Schaufelhöhen Profilverluste in der Regel den größten Anteil an den Strömungsverlusten aus. Die anderen Verlustmechanismen spielen in Niederdruckturbinen eine geringere Rolle als z.B. in Hochdruckturbinen. Daher ist es insbesondere in Niederdruckturbinen von großer Bedeutung eine möglichst optimale Strömung im Bereich der Schaufelprofile, insbesondere in deren Haupt-Strömungsabschnitten, zu erreichen.

Unter "Wandverlusten" werden vorliegend alle Verluste verstanden, die durch die Begrenzungswände, insbesondere durch innere und äußere Begrenzungswände sowohl innerhalb als auch außerhalb eines Strömungskanals, hervorgerufen werden bzw. durch an diesen Begrenzungswänden entlang strömende (Wand-)Grenzschichtströmungen. Den Wandverlusten zuzurechnende Verluste entstehen dabei jeweils durch die Ausbildung von Wandgrenzschichten, durch die Interaktion impulsarmer Sekundarströmungen mit der saugseitigen Grenzschicht an den Schaufeln sowie durch die Ausmischung der infolge der Ablösung entstehenden Wirbel im Strömungskanal mit der Hauptströmung. Das Strömungsfeld nahe der Begrenzungswände ist in einer Turbomaschine dabei üblicherweise durch ausgeprägte Sekundarströmungen gekennzeichnet, deren Stärke im Wesentlichen von der Grenzschichtdicke stromauf und der Umlenkung der Strömung abhängt. Die Entstehung von Sekundarströmungen resultiert insbesondere aus den sehr ungleichförmigen Verteilungen von Geschwindigkeit, Druck und Temperatur in der Grenzschicht. Durch auftretende Sekundärströmungen im Bereich eines Schaufelgitters, insbesondere in den Randbereichen des Schaufelgitters, kann es zu unerwünschten Fehlanströmungen eines oder mehrerer nachfolgender Schaufelgitter kommen, in deren Folge es zu Grenzschichtablösungen beim Eintritt in eine Schaufelreihe kommen kann. Infolgedessen können sich aus dem abgelösten Fluid unerwünschte Sekundärströmungen innerhalb des Strömungskanals ausbilden und damit eine nicht optimale, mit erheblichen Verlusten behaftete Strömung an den Haupt-Profilabschnitten der einzelnen Schaufeln.

Unter "Spaltverlusten" werden vorliegend Verluste verstanden, welche zwischen stillstehenden und rotierenden Bauteilen einer Turbomaschine entstehen, d.h. beispielsweise in den Spalten zwischen Rotor und ruhendem Stator sowohl am Gehäuse als auch an der Nabe, insbesondere durch Leckageströmungen. Ursache sind jeweils Druckunterschiede, beispielsweise der Druckausgleich zwischen Saug- und Druckseite bei deckbandlosen Schaufeln bzw. zwischen dem Druck stromaufwärts zum Druck stromabwärts einer Schaufelreihe bei Deckbandschaufeln. Treten Spaltverluste auf, reduziert sich der Massestrom durch die Schaufelpassage, was in einer reduzierten Arbeitsumsetzung resultiert und sich somit negativ auf den Wirkungsgrad auswirkt. In der Regel verursacht die Spaltströmung ferner eine Wirbelströmung, deren Generierung in der Regel ebenfalls Verluste verursacht.

Im Gehäusebereich einer Turbomaschine wird in der Regel das Laufschaufeldeckband von Arbeitsgas umströmt. Dabei strömt ein geringer Anteil an Arbeitsgas als Leckageströmung stromaufwärts der Laufschaufeln aus dem (Haupt-) Strömungskanal durch den Spalt zwischen Rotor und Gehäuse heraus und stromabwärts wieder in den (Haupt-)Strömungskanal ein und es entstehen Spaltverluste.

Im Nabenbereich müssen die Rotorscheiben vor den hohen Gastemperaturen im (Haupt-)Strömungskanal abgeschirmt werden. Hierzu kann dem Rotor Kühl-und/oder Sperrluft zugeführt werden, wobei die Menge vorzugsweise so bemessen wird, dass sowohl stromaufwärts, als auch stromabwärts einer Schaufelreihe ein Ausströmen der Kühl- und/oder Sperrluft in den (Haupt-)Strömungskanal erfolgt, insbesondere mit einem höheren Druck als im Arbeitsgas, um auf diese Weise das Eindringen von Heißgas in die Kammern zwischen Rotor und Stator zu verhindern.

Die in den (Haupt-)Strömungskanal eintretenden Leckage- und Kühl- und/oder Sperrluft-Strömungen sind komplex und führen zu ähnlichen Effekten wie die vorbeschriebenen Wandgrenzschichtströmungen. Sowohl die Leckageströmungen im Gehäusebereich als auch die Kühl- und/oder Sperrluftströmungen im Nabenbereich weisen in der Regel im Vergleich zur Hauptströmung jeweils unterschiedliche Strömungswinkel und Strömungsgeschwindigkeiten auf, wodurch es, wie bei den für die Wandverluste verantwortlichen Strömungen, zu unerwünschten, verlustbehafteten Strömungseffekten kommen kann.

Die Strömungsgeschwindigkeit der Leckageströmungen ist an der Oberflache der Begrenzungswände jeweils gleich Null, d.h. im Absolutsystem hat ein Fluidteilchen direkt an der Statorwand die Geschwindigkeit Null und ein Fluidteilchen am Rotor die örtliche Umfangsgeschwindigkeit. Dazwischen bildet sich eine stationär annähernd lineare Geschwindigkeitsverteilung aus. Die in den (Haupt-)Strömungskanal eintretenden Leckageströme sind daher wirbelbehaftet und haben im Mittel eine Umfangskomponente der Absolutgeschwindigkeit, die etwa der halben Umfangsgeschwindigkeit entspricht. Die Generierung dieser Wirbelströmung verursacht Verluste.

Eine falsche Strömungsrichtung der Leckageströmung und der Sperr- und/oder Kühlströmung kann im Randbereich des (Haupt-)Strömungskanals eine Fehlanströmung der stromabwärts folgenden Schaufelreihe verursachen. Dies führt in der Regel zu einem saugseitigen Auftreffen der Randströmung auf die nachfolgende Schaufelreihe und kann zu Ablösungen und der Bildung von Sekundarströmungen im (Haupt-)Strömungskanal führen, die sich im Bereich des Schaufelblattende in Richtung Saugseite bewegen. Dadurch entstehen in der Regel weitere Verluste.

Mithilfe eines erfindungsgemäßen, zusätzlichen ersten Leitprofils kann insbesondere die Strömung im Bereich des zugehörigen Schaufelblattendes, insbesondere im Randbereich des Schaufelblattes und/oder im Randbereich des Strömungskanals und/oder im Bereich einer Begrenzungswand des Strömungskanals, beeinflusst werden. Hierdurch können insbesondere auftretende Spalt- und/oder Leckageströmungen und/oder auftretende Grenzschichtströmungen, vor allem deren Richtung, effizient und bauraumsparend beeinflusst werden. Durch das sich insbesondere wenigstens teilweise in axialer Richtung und wenigstens teilweise in Umfangsrichtung erstreckende erste Leitprofil kann, ggf. mithilfe von weiteren Profilen und/oder durch vorteilhafte Profilgeometrien von Schaufelblattprofil und Leitprofil, insbesondere die Richtung von auftretenden Spalt- und/oder Leckageströmungen und/oder auftretenden Grenzschichtströmungen derart beeinflusst werden, dass beim Eintritt in die nachfolgende Schaufelreihe eine besser an die Hauptströmung angepasste Richtung und Geschwindigkeit erreicht werden kann, wodurch die beim Aufeinandertreffen von Haupt- und Spalt- und/oder Leckageströmungen und/oder Grenzschichtströmungen in der nachfolgenden Schaufelreihe entstehenden Verluste reduziert werden können.

Bei entsprechender Ausgestaltung der Schaufel, insbesondere des ersten Leitprofils, kann in einigen Ausführungen der vorliegenden Erfindung insbesondere erreicht werden, dass entstandene Spalt- und/oder Leckageströmungen und/oder Grenzschichtströmungen beim Zusammentreffen mit der Hauptströmung überwiegend und/oder nahezu, insbesondere genau, die Richtung der Hauptströmung aufweisen.

In einer Ausführung der vorliegenden Erfindung erstreckt sich insbesondere wenigstens ein erstes Leitprofil der Schaufel ausgehend von der Saugseite und/oder der Druckseite des Schaufelblattes, insbesondere wenigstens teilweise in Umfangsrichtung, insbesondere in Umfangsrichtung.

Hierdurch kann eine besonders vorteilhafte Beeinflussung der störenden Verlustströmungen erreicht werden.

Insbesondere ist das erste Leitprofil plattenähnlich oder flächig ausgebildet, insbesondere trennwandartig, wobei das erste Leitprofil insbesondere eine konstante Wandstärke oder aber eine in Umfangsrichtung und/oder in axialer Richtung veränderliche Wandstärke aufweisen kann. Ein derartiges Leitprofil ermöglicht eine besonders vorteilhafte Beeinflussung der Strömung. Insbesondere kann auf diese Weise die Strömung im Strömungskanal auf einfache Art und Weise zumindest teilweise in eine Hauptströmung und eine Randströmung separiert werden. Dies ermöglicht insbesondere eine gezielte, separate Beeinflussung von Haupt- und/oder Randströmung, insbesondere eine gezielte Beeinflussung der Randströmung, wodurch bei geeigneter Ausgestaltung der jeweiligen Profile Strömungsverluste reduziert werden können. Ferner ermöglicht ein derartig ausgebildetes Leitprofil die Bereitstellung einer einfach ausgestalteten Schaufel sowie eine einfache Herstellung dieser bzw. eines Schaufelsegmentes, insbesondere einer Schaufel mit einem ersten Leitprofil.

In einer Ausführung der vorliegenden Erfindung weist die Schaufel insbesondere wenigstens ein, einen Strömungskanal begrenzendes und mit der Schaufel, insbesondere mit einem Schaufelblattende, verbundenes Wandsegment auf, insbesondere ein Deckbandsegment oder ein Ringsegment, insbesondere ein inneres Deckbandsegment und/oder ein äußeres Deckbandsegment, wobei wenigstens ein erstes, insbesondere zusätzliches, Leitprofil in radialer Richtung beabstandet zum Wandsegment angeordnet ist, insbesondere in radialer Richtung nach innen, und sich insbesondere in Umfangsrichtung, insbesondere in wenigstens einer Radialebene, zumindest teilweise parallel zum Wandsegment erstreckt und/oder konzentrisch zum Wandsegment ausgebildet und angeordnet ist.

D.h. in einer Ausführung der vorliegenden Erfindung begrenzen das erste Leitprofil und ein Wandsegment, beispielsweise ein Deckbandsegment oder ein Ringsegment, in radialer Richtung zumindest teilweise, vorzugsweise vollständig, einen randseitigen Strömungskanal (Nebenströmungskanal). Dabei kann das erste Leitprofil insbesondere derart ausgebildet sein, dass es mit dem zugehörigen Wandsegment den randseitigen Strömungskanal (Nebenströmungskanal) zumindest teilweise derart begrenzt, dass in wenigstens einer Radialebene der Abstand zwischen dem Wandsegment und dem ersten Leitprofil in radialer Richtung in Umfangsrichtung zumindest über einen Teil des Umfangs konstant ist.

Hierdurch kann eine besonders vorteilhafte Strömungsbeeinflussung erreicht werden, insbesondere eine effiziente Umlenkung im Bereich des Schaufelblattendes.

In einer Ausführung der vorliegenden Erfindung ist das erste Leitprofil insbesondere in wenigstens einer Radialebene parallel und/oder konzentrisch zu einem Deckbandsegment oder Ringsegment der Schaufel ausgebildet; im Bereich des inneren Schaufelblattendes vorzugsweise parallel zu einem inneren Deckband oder Ringsegment, im Bereich des äußeren Schaufelblattendes vorzugsweise parallel zu einem äußeren Deckband.

Hierdurch kann eine besonders vorteilhafte Strömungsbeeinflussung erreicht werden.

In einer Ausführung der vorliegenden Erfindung sind das erste Leitprofil und ein Wandsegment insbesondere derart ausgebildet, dass ein durch diese in radialer Richtung wenigstens teilweise, vorzugsweise vollständig begrenzter randseitiger Strömungskanal (Nebenströmungskanal) einen sich in axialer Richtung in Strömungsrichtung verjüngenden Querschnitt aufweist, wobei der randseitige Strömungskanal dabei insbesondere zumindest in wenigstens einer Radialebene und zumindest über einen Teil des Umfangs einen konstanten Querschnitt in Umfangsrichtung aufweist.

Hierdurch kann eine besonders vorteilhafte Strömungsbeeinflussung der Randströmung erreicht werden.

In einer Ausführung der vorliegenden Erfindung weist die Schaufel wenigstens ein erstes Leitprofil auf, welches im Bereich des inneren Schaufelblattendes angeordnet ist, insbesondere auf einer radial äußeren Seite des inneren Deckbandes oder Ringsegmentes eines Innenringes und radial beabstandet zum inneren Deckband oder dem Ringsegment des Innenrings, wobei das erste Leitprofil dabei insbesondere zusammen mit dem inneren Deckband oder dem Ringsegment einen Nebenströmungskanal bildet sowie zusammen mit einer weiteren, insbesondere äußeren, Begrenzungswand, insbesondere zusammen mit einem im Bereich eines Endabschnitts des äußeren Schaufelblattendes angeordneten ersten Leitprofils oder einem äußeren Deckband, einen Hauptströmungskanal.

Hierdurch kann eine besonders vorteilhafte Strömungsbeeinflussung erreicht werden, insbesondere von der verlustbehafteten Strömung, insbesondere von deren Richtung.

In einer alternativen oder zusätzlichen Ausführung der vorliegenden Erfindung weist die Schaufel wenigstens ein erstes Leitprofil auf, welches im Bereich des äußeren Schaufelblattendes angeordnet ist, insbesondere auf einer radial inneren Seite eines äußeren Deckbandes und radial beabstandet zum äußeren Deckband, wobei das erste Leitprofil dabei insbesondere zusammen mit dem äußeren Deckband einen Nebenströmungskanal bildet sowie zusammen mit einer weiteren, insbesondere inneren, Begrenzungswand, insbesondere zusammen mit einem im Bereich eines Endabschnitts des inneren Schaufelblattendes angeordneten ersten Leitprofils oder einem inneren Deckband, einen Hauptströmungskanal.

Hierdurch kann eine besonders vorteilhafte Strömungsbeeinflussung erreicht werden, insbesondere von der verlustbehafteten Strömung, insbesondere von deren Richtung.

Das Schaufelblattprofil weist einen Hauptströmungsabschnitt mit einem Hauptprofil und einer Hauptprofilgeometrie und wenigstens einen Nebenabschnitt mit einem Nebenprofil und einer Nebenprofilgeometrie auf, insbesondere wenigstens einen Endabschnitt, insbesondere einen Endabschnitt im Bereich des radial inneren Schaufelblattendes oder im Bereich des radial äußeren Schaufelblattendes, wobei sich der Nebenabschnitt insbesondere vom Hauptströmungsabschnitt bis zum zugehörigen Schaufelblattende erstreckt.

In einer Ausführung der vorliegenden Erfindung ist wenigstens ein erstes, zusätzliches Leitprofil in radialer Richtung im Übergangsbereich vom Hauptströmungsabschnitt in den Nebenströmungsabschnitt angeordnet und erstreckt sich insbesondere auf dieser Höhe zumindest teilweise in Umfangsrichtung und/oder zumindest teilweise in tangentialer Richtung, insbesondere ausgehend von der Saugseite und/oder der Druckseite des Schaufelblattes.

Dabei kann sich das Nebenprofil in radialer Richtung, zumindest teilweise oder vollständig, in Verlängerung vom Hauptprofil erstrecken. Alternativ kann das Nebenprofil aber auch in Umfangsrichtung versetzt zum Hauptprofil angeordnet sein.

Durch eine Anordnung in Verlängerung vom Hauptprofil kann in der Regel eine bessere Kraftübertragung in ein zugehöriges Deckband oder in einen Schaufelfuß erreicht werden.

In einer Ausführung der vorliegenden Erfindung weist das Nebenprofil wenigstens eines Nebenabschnitts, insbesondere wenigstens am zugehörigen Schaufelblattende, wenigstens teilweise, vorzugsweise vollständig, eine zur Hauptprofilgeometrie identische Nebenprofilgeometrie auf.

In einer anderen, alternativen Ausführung einer Schaufel gemäß der vorliegenden Erfindung weist das Nebenprofil wenigstens eines Nebenabschnitts, insbesondere wenigstens am zugehörigen Schaufelblattende, wenigstens teilweise, vorzugsweise vollständig, eine von der Hauptprofilgeometrie verschiedene Nebenprofilgeometrie auf, insbesondere verschieden von der Hauptprofilgeometrie in dem an den Nebenabschnitt angrenzenden Bereich des Hauptströmungsabschnitts und/oder verschieden von der von der Hauptprofilgeometrie am anderen Schaufelblattende.

Hierdurch kann eine besonders vorteilhafte Strömungsbeeinflussung erreicht werden.

In einer Ausführung der vorliegenden Erfindung weist das Schaufelblatt, insbesondere das Schaufelblattprofil, im Bereich des Hauptströmungsabschnitts insbesondere wenigstens im Bereich der Profilvorderkante, insbesondere über eine gesamte Profillänge, d.h. entlang der gesamten Profilmittellinie in Strömungsrichtung, ein Hauptprofil mit einer konvex gekrümmten Saugseite und einer konkav gekrümmten Druckseite auf, d.h. die Profilvorderkante ist zur Druckseite hin gekrümmt bzw. zeigt zur Druckseite.

Hierdurch kann im Hauptströmungsabschnitt eine vorteilhafte Strömung erreicht werden.

In einer Ausführung der vorliegenden Erfindung weist das wenigstens eine Nebenprofil dabei vorzugsweise wenigstens ab einer Profilmitte in Strömungsrichtung, d.h. wenigstens ab der Hälfte der Länge einer zugehörigen Profilmittellinie oder Skelettlinie, insbesondere eine analog zum zugehörigen Hauptprofilabschnitt ausgebildete Krümmung auf. Insbesondere ist dabei jeweils ab der Profilmitte die Seite, die sich auf der Saugseite des Hauptprofilabschnitts befindet konvex gekrümmt, und die sich auf der Druckseite des Hauptprofilabschnitts befindende Seite ist ab der Profilmitte in Strömungsrichtung konkav gekrümmt.

Hierdurch kann eine besonders gute Annäherung an die Richtung der Hauptströmung im Bereich der Hinterkante des Schaufelblattes erreicht werden und infolgedessen eine verbesserte Anströmung eines nachfolgenden Schaufelgitters.

Das Nebenprofil wenigstens eines Nebenabschnitts weist eine zur Saugseite des zugehörigen Hauptprofilabschnitts gekrümmte oder in Richtung dieser versetzt angeordnete Profilvorderkante auf und/oder weist in Strömungsrichtung einen S-Schlag auf.

In einer Ausführung der vorliegenden Erfindung weist das Nebenprofil wenigstens eines Nebenabschnitts insbesondere im Bereich seiner Profilvorderkante bzw. Anströmkante eine zur Saugseite hin gedrehte Profilnase auf und ist insbesondere im Bereich der Saugseite (bezogen auf die Saugseite des Hauptprofils) konkav gekrümmt und im Bereich der Druckseite D (bezogen auf die Druckseite des Hauptprofils) konvex gekrümmt.

In einer Ausführung der vorliegenden Erfindung weist das Nebenprofil wenigstens eines Nebenabschnitts insbesondere zumindest in einem an die Profilvorderkante angrenzenden, vorderen Bereich, insbesondere in Strömungsrichtung bis zur Profilmitte, eine konkave Krümmung zur Saugseite des zugehörigen Hauptprofilabschnitts hin auf, insbesondere in Verbindung mit einer konvexen Krümmung ab der Profilmitte, und eine konvexe Krümmung zur Druckseite des zugehörigen Hauptprofilabschnitts hin und/oder einen S-Schlag auf. Insbesondere ist in einer Ausführung der vorliegenden Erfindung das Nebenprofil derart ausgebildet, dass eine Profilvorderkante des Nebenprofils zur Saugseite des zugehörigen Hauptprofilabschnitts hin gekrümmt ist bzw. zu dessen Saugseite zeigt.

Hierdurch kann eine besonders vorteilhafte Strömungsbeeinflussung erreicht werden. Insbesondere kann eine vorteilhafte Umlenkung störender, insbesondere verlustbehafteter, (Rand-)Strömungen und eine Annäherung und/oder Anpassung der Richtung dieser an die Hauptströmung erreicht werden, wodurch in vielen Fällen Strömungsverluste verringert werden können. Insbesondere kann mittels eines derartig ausgestalteten Nebenprofils eine auftretende Randströmung vorteilhaft beeinflusst werden ohne dass eine nachteilige Anpassung des Hauptprofils.

In einer Ausführung der vorliegenden Erfindung weist die Schaufel, insbesondere das Schaufelblatt, zusätzlich zum Schaufelblattprofil im Bereich des radial inneren und/oder des radial äußeren Schaufelblattendes wenigstens ein zweites Leitprofil auf, wobei sich das zweite Leitprofil wenigstens teilweise in axialer Richtung, insbesondere in axialer Richtung, und wenigstens teilweise in radialer Richtung, insbesondere in radialer Richtung, erstreckt und insbesondere in Umfangsrichtung beabstandet zum Schaufelblattprofil angeordnet ist, insbesondere in Umfangsrichtung beabstandet zum Nebenprofil.

Hierdurch kann eine verbesserte Kraftübertragung erreicht werden, insbesondere in ein zugehöriges Deckband(-segment) oder einen zugehörigen Innenring oder ein zugehöriges Innenringsegment und bei Laufschaufeln in den Schaufelfuß, insbesondere, wenn das Schaufelblatt ein Nebenprofil mit einer vom Hauptprofil abweichenden Nebenprofilgeometrie aufweist.

In einer Ausführung der vorliegenden Erfindung erstreckt sich wenigstens ein zweites, sich in radialer Richtung erstreckendes Leitprofil insbesondere zumindest teilweise, insbesondere vollständig, in radialer Richtung parallel zum Nebenprofil, insbesondere ausgehend von wenigstens einem ersten, sich zumindest teilweise in Umfangsrichtung und/oder zumindest teilweise in tangentialer Richtung erstreckenden ersten Leitprofil und insbesondere in radialer Richtung und insbesondere bis nahezu oder vollständig auf Höhe des zugehörigen Schaufelblattendes.

Hierdurch kann eine besonders vorteilhafte Strömungsbeeinflussung erreicht werden.

In einer Ausführung der vorliegenden Erfindung ist dabei das sich insbesondere in radialer Richtung erstreckende, zusätzliche zweite Leitprofil vorzugsweise in axialer Richtung kürzer ausgebildet, insbesondere deutlich kürzer, als das Nebenprofil oder das Hauptprofil des Schaufelblatts.

In einer Ausführung der vorliegenden Erfindung befinden sich insbesondere die Profilvorderkante wenigstens eines sich insbesondere in radialer Richtung erstreckenden, zusätzlichen zweiten Leitprofils und die Profilvorderkante des Schaufelblattprofils, insbesondere des Nebenprofils, vorzugsweise in axialer Richtung auf gleicher Höhe.

Alternativ kann sich die Profilvorderkante des sich insbesondere in radialer Richtung erstreckenden, zusätzlichen zweiten Leitprofils in axialer Richtung aber auch weiter strömungsaufwärts oder weiter strömungsabwärts befinden.

In einer Ausführung der vorliegenden Erfindung weist das zweite Leitprofil eine zur Saugseite des zugehörigen Hauptprofilabschnitts gekrümmte oder in Richtung dieser versetzt angeordnete Profilvorderkante auf und/oder in Strömungsrichtung einen S-Schlag.

In einer Ausführung der vorliegenden Erfindung weist wenigstens ein zweites Leitprofil insbesondere im Bereich seiner Profilvorderkante bzw. Anströmkante eine zur Saugseite hin gedrehte Profilnase auf und ist insbesondere im Bereich der Saugseite (bezogen auf die Saugseite des Hauptprofils) konkav gekrümmt und im Bereich der Druckseite D (bezogen auf die Druckseite des Hauptprofils) konvex gekrümmt.

In einer Ausführung der vorliegenden Erfindung weist das zweite, sich insbesondere in radialer Richtung erstreckende Leitprofil wenigstens in einem an seine Profilvorderkante angrenzenden, vorderen Bereich, insbesondere in Strömungsrichtung bis wenigstens zur Profilmitte, insbesondere über seine gesamte Profillänge in radialer Richtung, eine konkave Krümmung zur Saugseite des zugehörigen Hauptprofilabschnitts hin auf, insbesondere in Verbindung mit einer konvexen Krümmung ab der Profilmitte, und eine konvexe Krümmung zur Druckseite des zugehörigen Hauptprofilabschnitts hin und/oder einen S-Schlag auf. Insbesondere ist in einer Ausführung der vorliegenden Erfindung das zweite Leitprofil derart ausgebildet, dass eine Profilvorderkante des zweiten Leitprofils zur Saugseite des zugehörigen Hauptprofilabschnitts hin gekrümmt ist bzw. zu dessen Saugseite zeigt.

Hierdurch kann eine besonders vorteilhafte Strömungsbeeinflussung erreicht werden insbesondere von den im Bereich des Schaufelblattendes auftretenden Leckage-, Sperr-, Kühl- und/oder Grenzschichtströmungen.

In einer Ausführung der vorliegenden Erfindung weist eine Schaufel insbesondere ein Nebenprofil und/oder ein oder mehrere erste Leitprofile und/oder eine oder mehrere zweite Leitprofile oder kein zweites Leitprofil auf.

In einer Ausführung der vorliegenden Erfindung sind das oder die einer Schaufel zugeordneten Profile bzw. Profilabschnitte im Endbereich der Schaufel, insbesondere in einem Nebenabschnitt und/oder einem als Nebenkanal vorgesehenen Bereich, insbesondere dazu ausgestaltet, mit dem oder den Profilen wenigstens einer Nachbarschaufel (bezogen auf einen funktionsgemäßen Einbau- bzw. Verwendungszustand der Schaufel(n)) ein definiertes Strömungsprofil, insbesondere ein oder mehrere Einzelkanäle und/oder "Sub-Kanäle" innerhalb des Nebenkanals, auszubilden. Insbesondere sind das oder die einer Schaufel zugeordneten Profile und/oder Profilabschnitte im Endbereich der Schaufel dazu ausgestaltet, ein Strömungsprofil auszubilden, mittels welchem Strömungsverluste im wandnahen Bereich, insbesondere Grenzschichtströmungsverluste, reduziert werden können.

In einer Ausführung der vorliegenden Erfindung ist eine Profilgeometrie wenigstens eines Nebenprofils und/oder wenigstens eines Leitprofils im Nebenkanal im Eintrittsbereich an die Richtung einer Grenz- und Leckageströmung angepasst und im Austrittsbereich an die Richtung der Hauptströmung, insbesondere an eine mittlere Richtung der resultierenden Grenz- und Leckageströmung und/oder an eine mittlere resultierende Hauptströmungsrichtung.

Insbesondere ist wenigstens ein Nebenprofil und/oder wenigstens ein zweites Leitprofile derart ausgestaltet, dass es im Eintrittsbereich in den Nebenkanal möglichst optimal, insbesondere mit einem möglichst geringen Strömungswiderstand, anströmbar ist. D.h. das jeweilige Profil ist im Eintrittsbereich in den Nebenkanal insbesondere an die Richtung der Grenz- und Leckageströmung angepasst, wobei dazu insbesondere die jeweilige Profilvorderkante an einer resultierenden Richtung der Grenz- und Leckageströmung, insbesondere an der mittleren resultierenden Richtung, ausgerichtet ist.

Im Austrittsbereich hingegen ist insbesondere wenigstens ein Nebenprofil und/oder wenigstens ein zweites Leitprofile derart ausgestaltet, dass die Strömung im Nebenkanal derart beeinflusst wird, dass sie aus dem Nebenkanal mit ähnlicher oder gleicher Richtung aus dem Nebenkanal austritt wie eine, insbesondere parallele, insbesondere mittlere, Hauptströmung aus dem Hauptkanal.

Dazu weist in einer Ausführung der vorliegenden Erfindung die Schaufel im Nebenabschnitt insbesondere eine Profilgeometrie auf, die auf die Profilgeometrie wenigstens eines Hauptprofils im zugehörigen Austrittsbereich im Hauptabschnitt abgestimmt ist, insbesondere eine ähnliche oder gleiche Profilgeometrie.

In einer Ausführung der vorliegenden Erfindung weist ein Schaufelsegment für eine Turbomaschine, insbesondere ein Laufschaufelsegment oder ein Leitschaufelsegment, insbesondere für eine Gasturbine, insbesondere für eine Turbinenstufe einer Gasturbine, insbesondere für eine Niederdruckturbine oder für eine Hochdruckturbine, wenigstens ein erstes, einen Strömungskanal begrenzendes Wandsegment, insbesondere ein Deckbandsegment oder ein Ringsegment, und wenigstens eine Schaufel mit einem Schaufelblatt mit einem Schaufelblattprofil und einem radial inneren Schaufelblattende und einem radial äußeren Schaufelblattende auf, wobei das radial innere oder das radial äußere Schaufelblattende mit dem ersten Wandsegment verbunden ist.

Erfindungsgemäß weist das Schaufelsegment, insbesondere die Schaufel, das Schaufelblatt und/oder das Wandsegment, zusätzlich zum Schaufelblattprofil wenigstens ein im Bereich wenigstens eines radial inneren und/oder radial äußeren Schaufelblattendes und in radialer Richtung beabstandet zum zugehörigen Schaufelblattende angeordnetes und sich wenigstens teilweise in axialer Richtung, insbesondere in axialer Richtung, und wenigstens teilweise in Umfangsrichtung und/oder zumindest teilweise in tangentialer Richtung, insbesondere in Umfangsrichtung und/oder insbesondere in tangentialer Richtung erstreckendes erstes Leitprofil auf.

Mit einem erfindungsgemäßen Schaufelsegment kann auf einfache Art und Weise eine verbesserte, insbesondere wirkungsgradoptimierte, Turbomaschine bereitgestellt werden.

In einer Ausführung der vorliegenden Erfindung ist insbesondere wenigstens ein Schaufelblatt mit einem Schaufelblattende fest mit einem Wandsegment verbunden, wobei das Schaufelblatt und das Wandsegment auch einteilig ausgebildet sein können.

Alternativ können das Wandsegment und wenigstens ein Schaufelblatt auch mehrteilig ausgebildet sein. Ein Wandsegment kann insbesondere ein Teil eines Deckbands und/oder eines Deckbandsegments sein oder ein Teil eines Schaufelkranzes oder eines Schaufelkranzsegmentes, insbesondere ein Teil eines Innenrings oder Innenringsegments oder eines Außenrings oder Außenringsegments.

In einer Ausführung der vorliegenden Erfindung eines Schaufelsegments grenzen wenigstens zwei, sich in Umfangsrichtung erstreckende erste Leitprofile eines Schaufelsegments in Umfangsrichtung aneinander an und bilden ein sich in Umfangsrichtung erstreckendes erstes Leitprofilbandsegment, wobei insbesondere sämtliche erste Leitprofile ein gemeinsames, insbesondere geschlossenes, sich in Umfangsrichtung erstreckendes erstes Leitprofilbandsegment bilden.

Hierdurch kann eine besonders effiziente Strömungsbeeinflussung ohne die Erzeugung weiterer Leckageströmungen erreicht werden. Insbesondere kann eine besonders gute Trennung von Haupt- und Nebenströmung(en), insbesondere von Haupt- und Randströmung, erreicht werden, wodurch eine besonders vorteilhafte Beeinflussung der jeweiligen Strömungen ohne größere Nachteile für die jeweils andere Strömung erreicht werden kann. Hierdurch kann insbesondere wird insbesondere eine besonders vorteilhafte, nahezu separate Beeinflussung der Randströmung möglich.

In einer Ausführung der vorliegenden Erfindung eines Schaufelsegments weist das Schaufelsegment, insbesondere die Schaufel und/oder das Wandsegment, zusätzlich zum Schaufelblattprofil im Bereich wenigstens eines radial inneren und/oder radial äußeren Schaufelblattendes wenigstens ein zweites, zusätzliches Leitprofil auf, wobei sich das zweite Leitprofil wenigstens teilweise in axialer Richtung, insbesondere in axialer Richtung, und wenigstens teilweise in radialer Richtung, insbesondere in radialer Richtung, erstreckt und insbesondere in Umfangsrichtung beabstandet zum Schaufelblattprofil angeordnet ist.

Das erste Leitprofil und/oder das zweite Leitprofil ist/sind in einer Ausführung der Erfindung insbesondere einteilig mit der Schaufel, insbesondere einteilig mit dem Schaufelblatt, ausgebildet und/oder mit einem Wandsegment.

Alternativ können das erste Leitprofil und/oder das zweite Leitprofil jeweils als separates Bauteil ausgebildet sein oder eine separate Baugruppe sein, welche mit der Schaufel, insbesondere mit dem Schaufelblatt, und/oder mit dem Wandsegment gekoppelt, insbesondere fest verbunden ist in einem funktionsgemäßen Einbauzustand eines Schaufelsegments gemäß der vorliegenden Erfindung in einer Turbomaschine.

Das Schaufelsegment weist wenigstens eine erfindungsgemäße Schaufel auf.

In einer Ausführung der vorliegenden Erfindung eines Schaufelsegments weist wenigstens ein zweites Leitprofil eine zur Saugseite des zugehörigen Hauptprofilabschnitts gekrümmte oder in Richtung dieser versetzt angeordnete Profilvorderkante auf und/oder in Strömungsrichtung einen S-Schlag.

In einer Ausführung der vorliegenden Erfindung eines Schaufelsegments weist wenigstens ein zweites, sich insbesondere in radialer Richtung erstreckendes Leitprofil, wenigstens in einem an seine Profilvorderkante angrenzenden, vorderen Bereich, insbesondere in Strömungsrichtung bis wenigstens zur Profilmitte, insbesondere über seine gesamte Profillänge in radialer Richtung, eine konkave Krümmung zur Saugseite des zugehörigen Hauptprofilabschnitts hin auf, insbesondere in Verbindung mit einer konvexen Krümmung ab der Profilmitte, und eine konvexe Krümmung zur Druckseite des zugehörigen Hauptprofilabschnitts hin, insbesondere vor der Profilmitte, und/oder einen S-Schlag auf. Insbesondere ist in einer Ausführung der vorliegenden Erfindung das zweite Leitprofil derart ausgebildet, dass eine Profilvorderkante des zweiten Leitprofils zur Saugseite des zugehörigen Hauptprofilabschnitts hin gekrümmt ist bzw. zu dessen Saugseite zeigt.

In einer Ausführung einer Baugruppe gemäß der vorliegenden Erfindung für eine Turbomaschine, insbesondere eines Leitgitters oder Stators oder Laufgitters oder Rotors, insbesondere für eine Gasturbine, insbesondere für eine Turbinenstufe einer Gasturbine, insbesondere für eine Niederdruckturbine oder für eine Hochdruckturbine, weist die Baugruppe wenigstens eine erfindungsgemäß ausgebildete Schaufel und/oder wenigstens ein erfindungsgemäß ausgebildetes Schaufelsegment auf.

Eine erfindungsgemäße Turbomaschine weist wenigstens eine erfindungsgemäß ausgebildete Schaufel und/oder wenigstens ein erfindungsgemäß ausgebildetes Schaufelsegment und/oder wenigstens eine erfindungsgemäß ausgebildete Baugruppe auf.

Weitere vorteilhafte Weiterbildungen der vorliegenden Erfindung ergeben sich aus den Unteransprüchen und der nachfolgenden Beschreibung bevorzugter Ausführungen sowie den zugehörigen Figuren. Dabei sind in den Figuren funktionsgleiche Bauteile bzw. Komponenten mit gleichen Bezugszeichen versehen. Es zeigen, teilweise schematisiert:
- Fig. 1: einen Ausschnitt einer aus dem Stand der Technik bekannten Turbomaschine,
- Fig. 2: einen Ausschnitt eines ersten Ausführungsbeispiels einer erfindungsgemäßen Turbomaschine im Längsschnitt,
- Fig. 3: in perspektivischer Darstellung zwei benachbart angeordnete, erfindungsgemäße Laufschaufeln eines ersten Ausführungsbeispiels einer erfindungsgemäßen Baugruppe,
- Fig. 4: einen vergrößerten Ausschnitt der Laufschaufeln aus Fig. 3 in perspektivischer Darstellung im Bereich der radial inneren Schaufelblattenden,
- Fig. 5: eine der erfindungsgemäßen Laufschaufeln aus Fig. 2 in Einzelteildarstellung in Seitenansicht,
- Fig. 6a: einen abgewickelten Schnitt entlang der Schnittebene A-A' durch mehrere einzelne, benachbart angeordnete Laufschaufeln 33,
- Fig. 6b: einen abgewickelten Schnitt entlang der Schnittebene B-B' durch mehrere einzelne, benachbart angeordnete Laufschaufeln 33,
- Fig. 7: einen abgewickelten Schnitt entlang einer zu Fig. 6b analogen Schnittebene B-B' durch mehrere einzelne, benachbart angeordnete Laufschaufeln mit einer alternativen, erfindungsgemäßen Ausgestaltung,
- Fig. 8: einen Ausschnitt eines zweiten Ausführungsbeispiels einer erfindungsgemäßen Turbomaschine im Längsschnitt,
- Fig. 9: ein erfindungsgemäßes Leitschaufelsegment mit den erfindungsgemäßen Leitschaufeln aus Fig. 8 in perspektivischer Darstellung,
- Fig. 10: einen vergrößerten Ausschnitt im Bereich der radial äußeren Schaufelblattenden des erfindungsgemäßen Leitschaufelsegments aus Fig. 9,
- Fig. 11: einen vergrößerten Ausschnitt des erfindungsgemäßen Leitschaufelsegments aus Fig. 9 im Bereich der radial inneren Schaufelblattenden,
- Fig. 12: einen vergrößerten Ausschnitt des zweiten Ausführungsbeispiels einer erfindungsgemäßen Turbomaschine im Bereich des radial äußeren Schaufelblattendes der Leitschaufel,
- Fig. 13a: einen abgewickelten Schnitt durch die Schaufelblätter des erfindungsgemäßen Leitschaufelsegments aus der erfindungsgemäßen Turbomaschine aus den Fig. 8 und 12 entlang der Schnittebene A-A', und
- Fig. 13b: einen abgewickelten Schnitt durch die Schaufelblätter des erfindungsgemäßen Leitschaufelsegments aus der erfindungsgemäßen Turbomaschine aus den Fig. 8 und 12 entlang der Schnittebene B-B'.

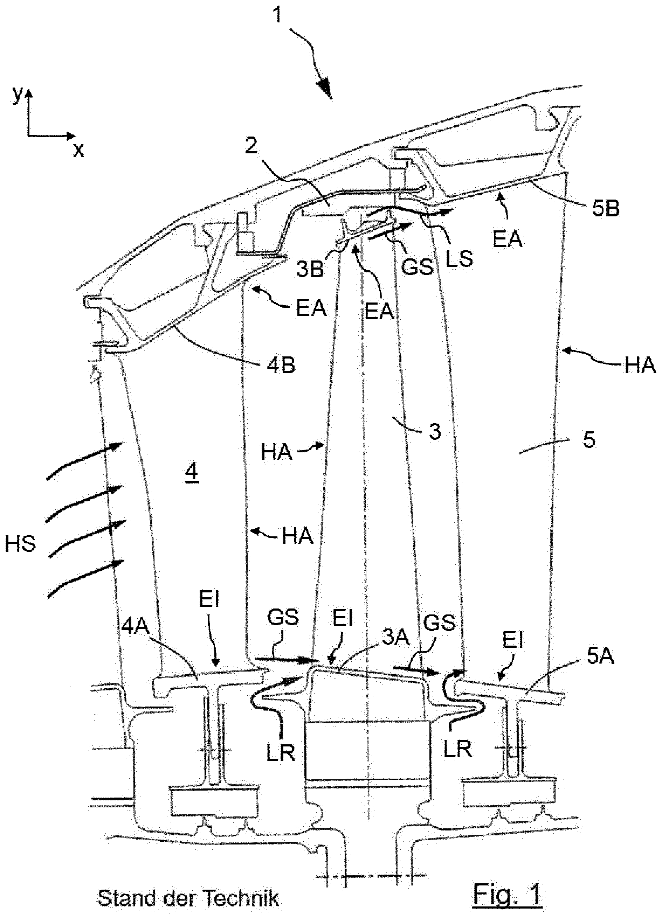

Fig. 1 zeigt einen Ausschnitt einer aus dem Stand der Technik bekannten Turbomaschine 1 in Form einer als Turbine, insbesondere als Gasturbine, ausgebildeten, axialen Strömungsmaschine 1 mit einem Hauptströmungskanal, welcher dazu ausgebildet ist, von einer Hauptströmung HS zur Umsetzung von Strömungsenergie in mechanische Energie durchströmt zu werden. Zur Energieumwandlung von Strömungsenergie in mechanische Energie weist die Turbomaschine 1 zwei Statoren mit jeweils einem hier nicht näher bezeichneten Leitgitter auf. Jedes Leitgitter weist dabei eine Vielzahl an in Umfangsrichtung gleichmäßig verteilt angeordneten und an einem Gehäuse der Turbomaschine 1 festgelegten Leitschaufeln mit Schaufelblättern 4 und 5 auf, wobei jeweils mehrere Leitschaufeln in Umfangsrichtung zu einem ebenfalls nicht näher bezeichneten Leitschaufelsegment zusammengefasst sind.

Die Leitschaufeln weisen jeweils ein Schaufelblatt 4 bzw. 5 mit einem Schaufelblattprofil und jeweils einem radial weiter innen liegenden Schaufelblattende EI sowie ein radial weiter außenliegendes Schaufelblattende EA auf, wobei die einzelnen Schaufelblätter 4 bzw. 5 jeweils einteilig mit einem in Umfangsrichtung verlaufenden und sich zumindest teilweise in axialer Richtung x erstreckenden Deckband 4A bzw. 4B sowie 5A bzw. 5B miteinander verbunden sind. Eine jeweils den Schaufelblättern 4 bzw. 5 zugewandte Fläche der Deckbänder 4A, 4B sowie 5A und 5B begrenzt dabei jeweils den Haupt-Strömungskanal in radialer Richtung y, durch welchen die Hauptströmung HS in axialer Richtung durch die Turbomaschine 1 strömt.

Über entsprechend ausgestaltete, hier nicht näher bezeichnete Hakenprofile, welche jeweils mit den radial äußeren Deckbändern 4B bzw. 5B verbunden sind, sind die einzelnen Leitschaufeln bzw. Leitschaufelsegmente im Gehäuse der Turbomaschine 1 festgelegt.

Zwischen den beiden gehäusefest angeordneten Leitgittern mit den Leitschaufeln und Schaufelblättern 4 und 5 ist in axialer Richtung x ein Rotor bzw. ein um eine Hauptmaschinenachse drehbares Laufschaufelgitter mit Laufschaufeln mit Schaufelblättern 3 angeordnet, wobei die einzelnen Laufschaufeln, insbesondere deren Schaufelblätter 3, ebenfalls ein radial inneres, als Begrenzungswand des Hauptströmungskanals dienenden Deckband 3A sowie ein radial äußeres, auch als Begrenzungswand vom Hauptströmungskanal dienendes, sich in Umfangsrichtung und in axialer Richtung zumindest teilweise erstreckendes Deckband 3B aufweisen.

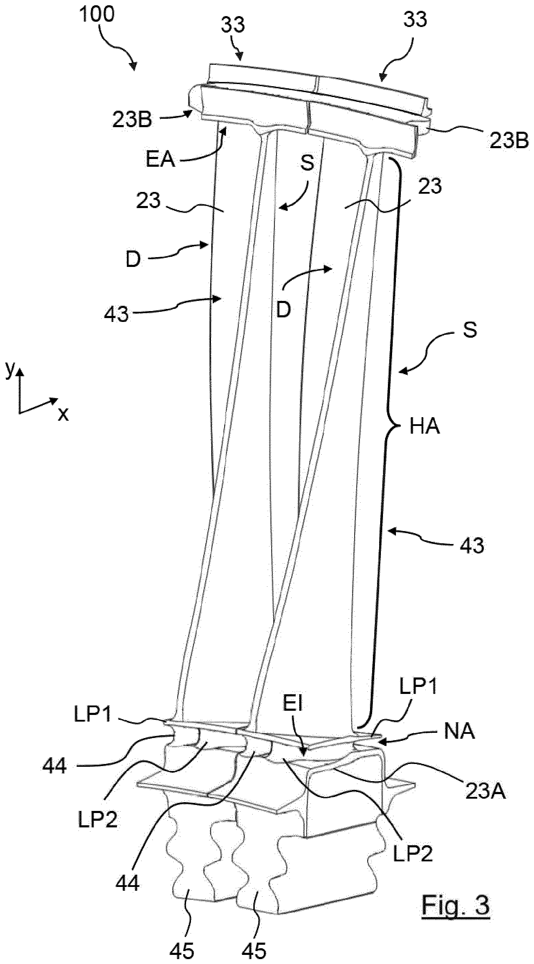

Die Laufschaufeln sind dabei mithilfe eines nicht näher bezeichneten Schaufelfußes (45, vgl. Fig. 3) an ihrem radial inneren Ende am Rotor befestigt und mittels des Rotors drehbar um die Hauptmaschinenachse gegenüber dem Gehäuse gelagert.

Um den Nabenbereich möglichst vor den hohen Gastemperaturen der Hauptströmung HS im Hauptströmungskanal abzuschirmen, sind die Leit- und Laufschaufeln insbesondere im Bereich ihres nabenseitigen Endes, derart ausgebildet, dass sie sich unabhängig von der Position des Rotors relativ zum Stator in axialer Richtung zumindest teilweise geometrisch überlappen. Ferner kann zur Verbesserung der Abschirmung des Nabenbereichs dem Hauptströmungskanal von radial innen Kühl- bzw. Sperrluft LR zugeführt werden, welche dann die vorbeschriebene Überlappung von Leit- und Laufschaufeln labyrinthartig umströmt, wodurch ein Austreten von Heißgas aus dem Hauptströmungskanal in Richtung Rotor und Nabe verhindert bzw. gesperrt wird.

Der auf diese Weise in den Hauptströmungskanal eingebrachte Fluidstrom LR, der auch als eine Leckageströmung betrachtet werden kann, kann zu einer unerwünschten Strömungsbeeinflussung der Hauptströmung führen, insbesondere zu unerwünschten Strömungsverlusten im Bereich des zugehörigen Schaufelblattendes.

Im Bereich der radial äußeren Schaufelblattenden EA, insbesondere im Bereich der Laufschaufelspitzen des Laufschaufelblatts 3, entstehen in der Regel beim Betrieb der Turbomaschine 1 ferner weitere Leckageströmungen LS. Zur Verringerung dieser sind Gaskanalabdichtungen 2 vorgesehen.

Durch die für die erforderliche Freigängigkeit in Drehrichtung des Rotors im Bereich der Laufschaufelspitzen erforderlichen Spalte treten insbesondere Heißgase aus dem Hauptströmungskanal aus, und zwar über die Spalte hinter der Laufschaufel, welche außen zwischen den Leitschaufelspitzen und der Gaskanalabdichtung 2 hindurch strömen können und hinter der Laufschaufel in die Hauptströmung HS zurückgeführt werden können. Dabei kann es beim Wiedereintritt bzw. dem Einleiten der Leckageströmungen in die Hauptströmung HS ebenfalls zu einer unerwünschten Beeinflussung der Hauptströmung HS kommen, insbesondere zu unerwünschten, verlustbehafteten Strömungseffekten wie Ablösungen, Verwirbelungen etc., was sich negativ auf den Wirkungsgrad auswirkt.

Im Bereich der Deckbänder 3A, 3B, 4A,4B; 5A, 5B; kann es ferner zur Entstehung von Grenzschichtströmungen GS kommen, welche ebenfalls eine von der Hauptströmung HS abweichende Strömungsrichtung aufweisen, was in Fig. 1 durch die Symbolpfeile nur beispielhalber für die Laufschaufel in der Mitte angedeutet ist. In der Folge können auch die bereits für sich genommen verlustbehafteten Grenzschichtströmungen GS, insbesondere aufgrund ihrer von der Hauptströmungsrichtung HS abweichenden Strömungsrichtung wie die zuvor beschriebenen Leckageströmungen LS und LR b zu weiteren Strömungsverlusten führen, insbesondere zu Ablösungen, Verwirbelungen oder dergleichen.

Die entstehenden Strömungsverluste sind dabei insbesondere davon abhängig, wie sehr sich Hauptströmung HS und Sekundärströmungen, z.B. Leckageströmungen LR, LS oder Grenzschichtströmungen GS, in Richtung und Geschwindigkeit unterscheiden.

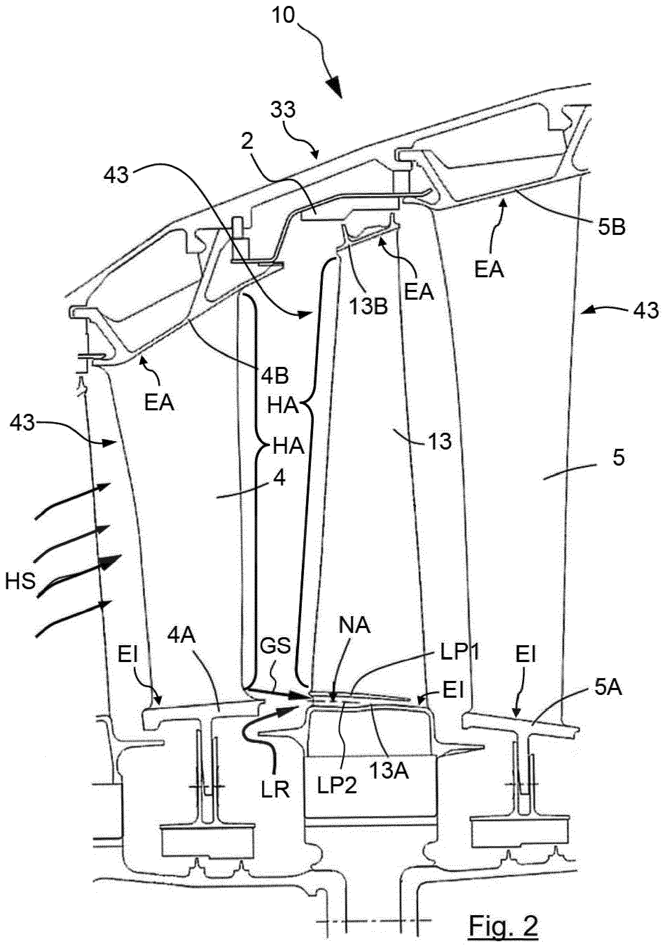

Fig. 2 zeigt einen Ausschnitt eines ersten Ausführungsbeispiels einer erfindungsgemäßen Turbomaschine 10 im Längsschnitt, wobei diese Turbomaschine 10 ähnlich wie die zuvor anhand von Fig.1 beschriebene und aus dem Stand der Technik bekannte Turbomaschine 1 aufgebaut ist, sich jedoch darin von dieser unterscheidet, dass die erfindungsgemäße Turbomaschine 10 eine erfindungsgemäße Laufschaufel 33 mit einem Schaufelblatt 13 aufweist.

Die erfindungsgemäße Laufschaufel 33 weist ein Schaufelblattprofil sowie ein radial inneres Schaufelblattende EI und ein radial äußeres Schaufelblattende EA auf, wobei die Laufschaufel 33 jeweils ein radial inneres Deckband 13A sowie ein radial äußeres Deckband 13B aufweist, welche den Hauptströmungskanal in radialer Richtung nach innen sowie nach außen begrenzen.

Im Unterschied zu den im Zusammenhang mit Fig.1 beschriebenen Laufschaufeln 3 weist das Schaufelblatt 13 der erfindungsgemäßen Laufschaufel 33 einen Hauptströmungsabschnitt HA sowie einen Nebenabschnitt NA im Bereich des radial inneren Schaufelblattendes EI auf sowie ein zusätzlich zum Hauptprofil des Schaufelblattes 13 vorhandenes erstes Leitprofil LP1, welches sich zumindest teilweise in axialer Richtung x sowie in Umfangsrichtung erstreckt, insbesondere jeweils ausgehend von der Saugseite S und der Druckseite D, und zusammen mit dem inneren Deckband 13A einen Nebenströmungskanal radial innerhalb vom Hauptströmungskanal bildet.

Durch das zusätzliche erste Leitprofil LP 1 können die im Bereich des radial inneren Schaufelblattendes EI auf das Schaufelblatt 13 treffenden, verlustverursachenden Grenzschichtströmungen GS und die Leckageströmungen LR, beeinflusst werden, insbesondere derart, dass ihre Richtung an die Hauptströmung HS angenähert, insbesondere angepasst werden kann.

Infolgedessen können die in Strömungsrichtung nach den erfindungsgemäßen Laufschaufeln 33 angeordneten Leitschaufeln bzw. insbesondere deren Schaufelblätter 5 in vorteilhafterweise, insbesondere nahezu in Hauptströmungsrichtung HS und nicht deutlich abweichend davon, angeströmt werden. Dadurch kann die Gefahr von Fehlanströmungen reduziert werden und infolgedessen entstehende Strömungsverluste können reduziert werden.

Neben dem ersten, zusätzlichen, sich insbesondere im Wesentlichen in axialer Richtung x sowie in Umfangsrichtung erstreckenden ersten Leitprofil LP 1 ist in radialer Richtung innerhalb vom ersten Leitprofil LP 1 im Nebenabschnitt NA ein zweites, zusätzliches, hier nur angedeutetes Leitprofil LP2 vorgesehen, welche sich ebenfalls zumindest teilweise in axialer Richtung erstreckt und in radialer Richtung y insbesondere parallel zu einem Abschnitt des Schaufelblattes 13 in Verlängerung des Hauptströmungsabschnitts HA verläuft (vgl. Fig.3).

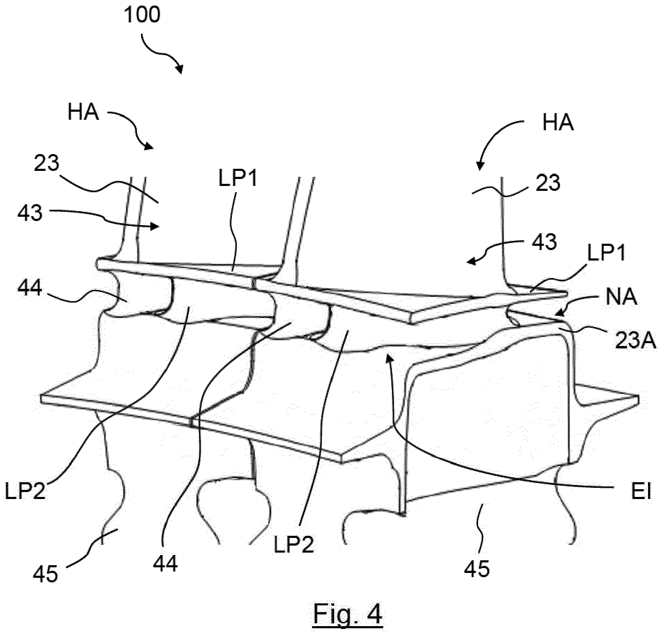

Fig. 3 zeigt in perspektivischer Darstellung zwei benachbart angeordnete, erfindungsgemäße Laufschaufeln 33 eines ersten Ausführungsbeispiels einer erfindungsgemäßen Baugruppe 100 und Fig. 4 einen zugehörigen vergrößerten Ausschnitt der Laufschaufeln 33 aus Fig. 3 in perspektivischer Darstellung im Bereich der radial inneren Schaufelblattenden EI, wobei die beiden Laufschaufeln 33, wie die zuvor beschriebene, erfindungsgemäße Laufschaufel 33 jeweils ein Schaufelblattprofil mit einem radial inneren Schaufelblattende EI und einem radial äußeren Schaufelblattende EA aufweisen, wobei das Schaufelblatt 23 jeweils einen Hauptströmungsabschnitt HA bildenden Teil mit einem Hauptprofil 43 und einen Nebenabschnitt NA im Bereich des radial inneren Schaufelblattendes EI aufweist. Das Hauptprofil 43 weist auch jeweils eine Saugseite S und eine Druckseite D auf.

Der Hauptströmungsabschnitt HA dient dabei hauptsächlich der Energieumsetzung zwischen dem an den Laufschaufeln 33 bzw. den Schaufelblättern 23 vorbeiströmenden mechanischen Fluid in mechanische Energie bzw. umgekehrt, während der Nebenabschnitt NA insbesondere zur Strömungsbeeinflussung im Bereich des radial inneren Schaufelblattendes EI der Laufschaufeln 33 dient.

In dieser Darstellung ist insbesondere gut das sich in axialer Richtung x und in Umfangsrichtung erstreckende, erste, zusätzliche Leitprofil LP1 zu erkennen, welches bei diesem Ausführungsbeispiel insbesondere das Schaufelblattprofil in den Hauptströmungsabschnitt HA und den Nebenabschnitt NA unterteilt.

Ferner ist anhand von dieser Darstellung gut erkennbar, dass die zusätzlichen Leitprofile LP 1 der beiden Laufschaufeln 33 jeweils unmittelbar aneinandergrenzen und ein gemeinsames Leitprofilband ausbilden.

Des Weiteren ist in dieser Darstellung gut der durch die ersten Leitprofile LP1 zusammen mit den inneren Deckbandsegmenten 23A ausgebildete Neben(strömungs)kanal im Bereich des radial inneren Laufschaufelblattendes EI zu erkennen. Ferner sind aus dieser Darstellung die unterschiedlichen Profilgeometrien im Bereich des Hauptströmungsabschnitts HA und im Nebenabschnitt NA zu erkennen, wobei die Laufschaufeln 33 jeweils ein Hauptprofil 43 und ein Nebenprofil 44 sowie erste Leitprofile LP 1 und zweite Leitprofile LP2 aufweisen. Bei diesem Ausführungsbeispiel bilden dabei die Nebenprofile 44 der Laufschaufeln 33 zusammen mit den zweiten Leitprofilen LP2 das Strömungsprofil im Nebenkanal, welcher unter anderem durch die inneren Deckbandsegmente 23A und die ersten Leitprofile LP 1 begrenzt wird. Die einzelnen, einer Schaufel 33 zugeordneten Nebenkanal-Profile, in diesem Fall jeweils ein Nebenprofil 44 sowie ein zweites Leitprofil LP2, bilden dabei, insbesondere im Zusammenspiel mit den jeweiligen Nebenkanal-Profilen 44 und den zweiten Leitprofilen LP2 der Nachbarschaufeln, ein gewünschtes und definiertes Strömungsprofil, insbesondere einen oder mehrere definierte Einzelkanäle und/oder "Sub-Kanäle" innerhalb des Nebenkanals, welche beim Betrieb der zugehörigen Turbine umströmt werden, insbesondere von den Grenz- und Leckageströmungen LR, GS.Im Bereich des radial äußeren Schaufelblattendes EI ist bei diesem Ausführungsbeispiel hingegen lediglich ein Deckband 23B vorgesehen. Darüberhinausgehende, gezielte Maßnahmen zur Strömungsbeeinflussung, insbesondere von Grenzschicht- und/oder Leckageströmungen, sind im Bereich um das äußere Deckband 23B herum jedoch nicht vorgesehen. Die (zusätzliche) Anordnung erster Leitprofile LP1 und/oder zweiter Leitprofile LP2 ist jedoch denkbar und erscheint in einigen Anwendungsfällen auch vorteilhaft.

Bezogen auf eine radiale Richtung y weist das Schaufelblatt 23 ein sich in radialer Richtung y vom inneren Deckband 23A bis zum ersten Leitprofil LP1 erstreckendes Nebenprofil 44 auf sowie ein parallel dazu ausgebildetes zweites Leitprofil LP2. Das Nebenprofil 44 geht dabei ausgehend vom inneren Deckband 23A in Richtung des Hauptprofils 43 zunehmend in das Hauptprofil 43 über, weist jedoch im Bereich seiner Profilvorderkante bzw. Anströmkante eine zur Saugseite hin gedrehte Profilnase auf und ist insbesondere im Bereich der Saugseite S (bezogen auf die Saugseite des Hauptprofils 43) konkav gekrümmt und im Bereich der Druckseite D (bezogen auf die Druckseite des Hauptprofils 43) konvex gekrümmt.

Die zweiten Leitprofile LP2 verlaufen insbesondere parallel zu den Nebenprofilen 44 und erstrecken sich ebenfalls vom inneren Deckband 23A bis zu den ersten Leitprofilen LP1, welche sich bei diesem Ausführungsbeispiel insbesondere im Wesentlichen parallel zum inneren Deckband 23A erstrecken. Durch die vom Hauptprofil 43 abweichende Profilgeometrie des Nebenprofils 44 kann im Bereich des radial inneren Schaufelblattendes BI, und damit insbesondere im Wandbereich, nämlich im Bereich des inneren Deckbands 23A, die Strömung in besonders vorteilhafter Weise beeinflusst werden, insbesondere die entstehenden, verlustbehafteten Strömungen wie Leckageströmungen LR, LS, beispielsweise infolge von Kühl-und Sperrluftzufuhr LR, oder von Grenzschichtströmungen GS, ohne übermäßig große Nachteile im Bereich des Hauptströmungsabschnitts HA zu verursachen. Vielmehr kann bei einer entsprechenden Ausgestaltung bzw. Wahl der Profilgeometrien im Nebenabschnitt NA durch die Reduzierung von Strömungsverlusten eine Wirkungsgradverbesserung erreicht werden. Die erreichbare Wirkungsgradverbesserung ergibt sich dabei jeweils insbesondere durch die sich im Wesentlichen in axialer Richtung x und in Umfangsrichtung erstreckenden ersten Leitprofile LP1 sowie durch die im Bereich einer Profilvorderkante veränderte Krümmung des Nebenprofils 44, insbesondere durch eine Drehung der Profilnase zur Saugseite S hin.

Insbesondere sind das oder die Nebenprofile 44 und/oder das oder die zweiten Leitprofile LP2 dabei derart ausgestaltet, dass sie im Eintrittsbereich in den Nebenkanal möglichst optimal, insbesondere mit einem möglichst geringen Strömungswiderstand, angeströmt werden können. D.h. sie sind insbesondere im Eintrittsbereich in den Nebenkanal an die Richtung der Grenz- und Leckageströmung angepasst, wobei dazu insbesondere die jeweilige Profilvorderkante an einer Richtung, insbesondere an der mittleren Richtung der Grenz- und Leckageströmung, ausgerichtet ist.

Im Austrittsbereich hingegen sind das oder die Nebenprofile 44 und/oder das oder die zweiten Leitprofile LP2 dabei insbesondere derart ausgestaltet, dass sie im Austrittsbereich eine auf die Profilgeometrie des oder der Hauptprofile 43 im zugehörigen Austrittsbereich im Hauptabschnitt abgestimmte, insbesondere eine ähnliche oder gleiche, Profilgeometrie aufweisen und/oder eine Profilgeometrie, mittels welcher eine Strömung im Nebenkanal derart beeinflussbar ist, dass die Strömung mit ähnlicher oder gleicher Strömungsrichtung aus dem Nebenkanal austritt wie eine, insbesondere parallele, insbesondere mittlere, Hauptströmung HS aus dem Hauptkanal und/oder im Bereich des Hauptabschnitts HA.

Die zweiten Leitprofile LP2 tragen zwar auch zur Verbesserung der Strömung im Bereich des radial inneren Schaufelendes EI bei, dienen jedoch hauptsächlich dazu, die im Betrieb auftretenden und auf das Schaufelblatt 23 wirkenden Kräfte besser in einen Schaufelfuß 45 einleiten zu können, insbesondere um eine bessere Kraftverteilung im Übergangsbereich vom Hauptströmungsabschnitt HA in den Nebenabschnitt NA sowie den Schaufelfuß 45 zu erreichen.

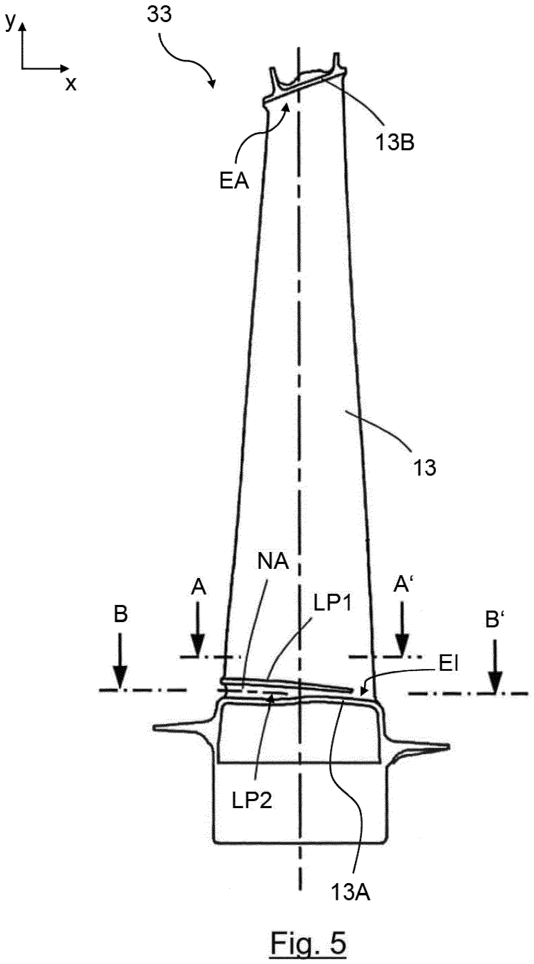

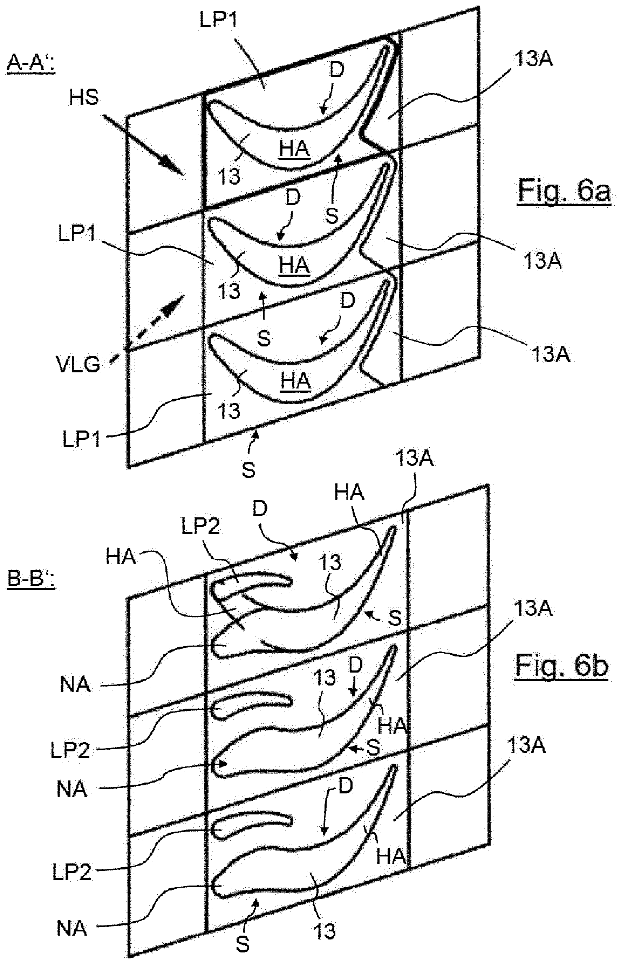

Fig. 6a zeigt zum besseren Verständnis der verschiedenen Profilgeometrien in den unterschiedlichen Schaufelblattabschnitten HA und NA einen abgewickelten Schnitt entlang der Schnittebene A-A' durch mehrere erfindungsgemäße Laufschaufeln gemäß Fig. 2 bzw. 5.

Fig. 6b zeigt einen zugehörigen, abgewickelten Schnitt entlang der Schnittebene B-B', wobei die Lage der Schnittebenen A-A' und B-B' aus Fig. 5 ersichtlich ist, welche die erfindungsgemäßen Laufschaufeln 33 aus Fig. 2 in Einzelteildarstellung in Seitenansicht zeigt.

Anhand von Figur 6a, welche einen Querschnitt durch die Profilgeometrie des Schaufelblatts 13 im Bereich des Hauptströmungsabschnitts HA zeigt, ist gut erkennbar, dass die Profilgeometrie des Schaufelblatts 13 eine vorteilhaft für die Hauptströmung HS ausgebildete Geometrie aufweist und insbesondere einen vorteilhaften Strömungseinlauf zwischen den einzelnen Laufschaufeln 13 ermöglicht (vgl. die Pfeilrichtung, welche die Hauptströmungsrichtung HS symbolisiert). Anhand dieser Darstellung ist ferner gut erkennbar, dass zum einen die Schaufelblätter 13 jeweils eine konkav gekrümmte Druckseite D sowie eine konvex gekrümmte Saugseite S aufweisen und einen sich in Umfangsrichtung und axialer Richtung erstreckendes erstes Leitprofil LP1 (welches durch die jeweils umrahmten Flächen symbolisiert ist). Die ersten Leitprofile LP 1 ermöglichen eine besonders vorteilhafte Beeinflussung der verlustbehafteten Strömungen, welche vorliegend durch den Richtungsvektor VRG als Resultierende symbolisch dargestellt sind.

In dem Nebenabschnitt NA hingegen weisen die Profilgeometrien des Schaufelblatts 13 jeweils eine vom Hauptabschnitt HA abweichende Profilgeometrie auf, zumindest im Bereich der Profilvorderkante, welche sich, bezogen auf die Darstellung in Fig. 6b an der linken Seite des Profilquerschnitts befindet. Insbesondere ist jeweils eine Profilnase bzw. die vordere Profilkante zur Saugseite S des Schaufelblatts 13 gedreht bzw. gekrümmt. Dabei weist insbesondere ein vorderer Bereich um die Profilvorderkante herum bzw. ein an diese angrenzender Bereich eine konvexe Krümmung auf der Saugseite S auf sowie eine konkave Krümmung auf der Druckseite D. Die Skelettlinie des Nebenprofils folgt dabei in etwa einem S-Schlag.

Des Weiteren ist anhand von Fig. 6b gut erkennbar, dass die einzelnen Laufschaufeln 33 zusätzlich zu dem jeweiligen Nebenprofil des Schaufelblatts 13 im Nebenabschnitt NA (Vergleich Figur 5) ferner ein zusätzliches, zweites Leitprofil LP2 aufweisen, wobei sich das zusätzliche Leitprofil LP2 jeweils insbesondere parallel zum vorderen Bereich des Nebenprofils im Nebenabschnitt NA erstreckt, insbesondere in axialer Richtung und in radialer Richtung.

Das zweite Leitprofil LP2 erstreckt sich dabei in axialer Richtung x wenigstens über einen Teil der Länge des Neben- bzw. Hauptprofils des Schaufelblattes 13. Dies ist jedoch nicht zwingend erforderlich, sondern vielmehr kann sich das zweite Leitprofil LP2 auch über eine größere oder eine geringere Länge in axialer Richtung x erstrecken oder auch in radialer Richtung y eine geringere Ausdehnung aufweisen. Ferner ist nicht zwingend ein paralleler Verlauf zum vorderen Bereich des Nebenprofils im Bereich des Nebenabschnitts NA des Schaufelblattes 13 erforderlich. Hierdurch können jedoch besonders gute Ergebnisse im Hinblick auf die Strömungsbeeinflussung erzielt werden, eine entsprechend geeignete Gestaltung, insbesondere einen entsprechenden Anstellwinkel von Nebenprofil und zweitem Leitprofil LP2 vorausgesetzt.

Insbesondere durch die anhand von Fig. 6b erkennbare Drehung der Profilnase bzw. Anstellung des Profils des Nebenabschnitts NA zur Saugseite hin, kann eine besonders vorteilhafte Beeinflussung der verlustbehafteten Sekundärströmungen im wandnahen Bereich, insbesondere im Bereich eines zugehörigen Schaufelblattendes bzw. im Bereich einer Begrenzungswand erreicht werden

Auf diese Art und Weise, insbesondere durch das Leiten der Sekundärströmungen durch den Nebenströmungskanal zwischen dem inneren Deckband 13A und den ersten Leitprofilen LP 1 können, bei entsprechender geometrischer Gestaltung der Kanalgeometrie, die verlustbehafteten Sekundärströmungen derart beeinflusst werden, dass eine zur Hauptströmung HS passende Strömungsgeschwindigkeit und Richtung erreicht werden kann, wodurch Strömungsverluste reduziert werden können und der Wirkungsgrad verbessert werden kann.

Die anhand der Figuren 6a und 6b erläuterte, vorteilhafte Ausgestaltung einer erfindungsgemäßen Laufschaufel, insbesondere im Bereich eines Schaufelblattendes EI, kann analog auf eine Leitschaufel übertragen werden, und zwar nicht nur auf den radial inneren Endbereich EI eines Leitschaufelblatts, sondern auch auf den radial äußeren, gehäusenahen Endbereich EA.

In einigen Anwendungsfällen kann es auch vorteilhaft sein, sowohl im Bereich des radial inneren Schaufelblattendes EI als auch im Bereich des radial äußeren Schaufelblattendes EA jeweils ein entsprechendes, erfindungsgemäßes erstes Leitprofil LP 1 zur Strömungsbeeinflussung der unerwünschten Sekundärströmungen vorzusehen.

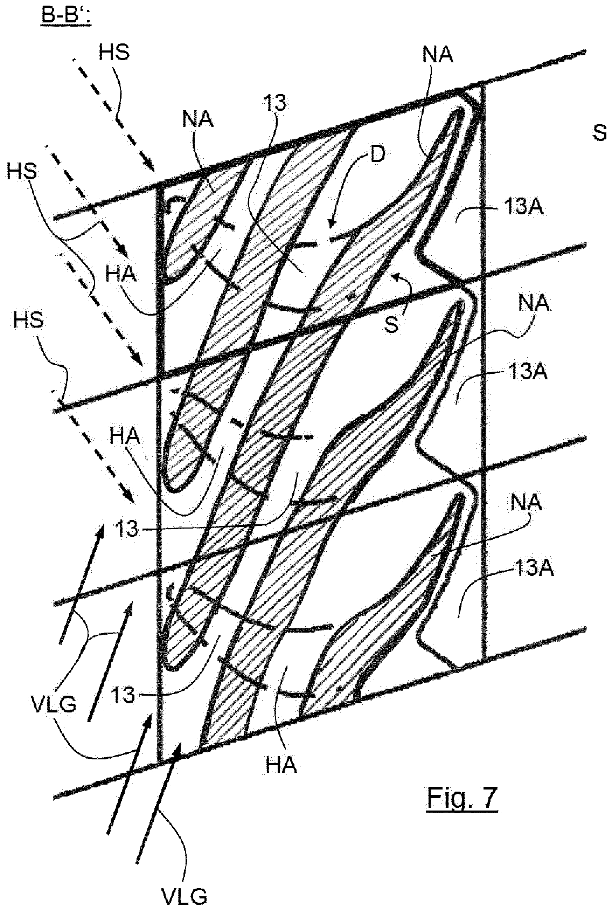

Fig. 7 zeigt einen abgewickelten Schnitt entlang einer zu Fig. 6b analogen Schnittebene B-B' durch mehrere einzelne, benachbart angeordnete Laufschaufeln mit einer alternativen, erfindungsgemäßen Ausgestaltung der Profile, wobei in diesem Fall die Nebenabschnitte der Schaufeln nicht nur eine leicht zur Saugseite gekrümmte Profilnase oder Vorderkante aufweisen wie bei dem Beispiel in Fig. 6b, sondern die einzelnen Nebenabschnitte NA zusammen, d.h. die Nebenabschnitte NA mehrerer Schaufeln, jeweils mit den benachbarten Schaufeln, insbesondere deren Nebenabschnitten NA, "Sub"-Kanäle im Nebenkanal bilden, deren Verlauf insbesondere im Eintrittsbereich in den Nebenkanal parallel zur Strömungsrichtung der Sekundärströmung VLG, insbesondere zur resultierenden Sekundärströmung, ist. Die "Sub"-Kanäle können dabei auch durch Durchbrüche gebildet sein. Zweite Leitprofile sind nicht vorhanden.

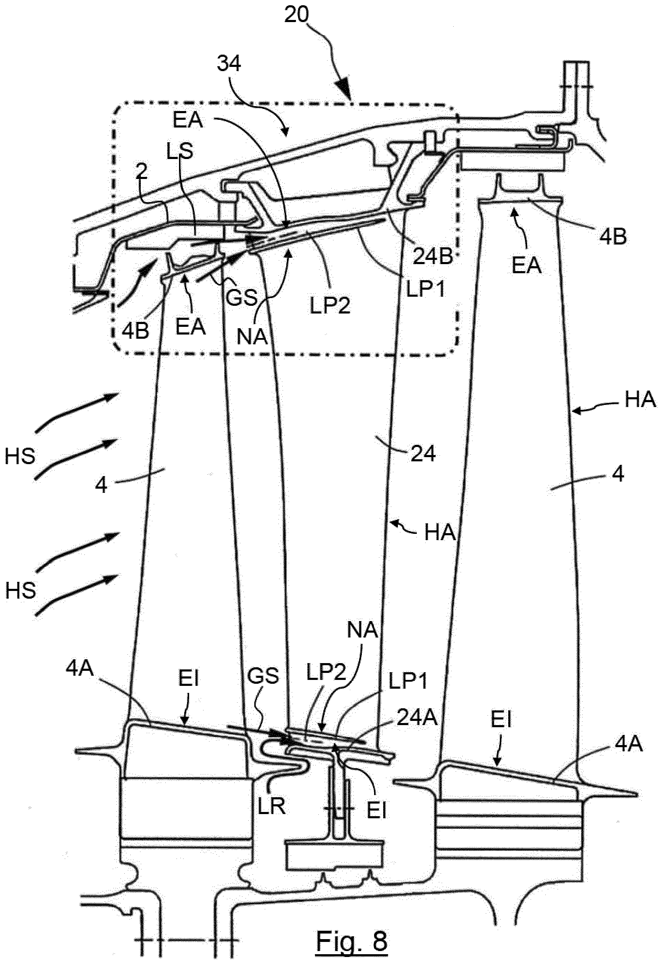

Fig. 8 zeigt beispielweise einen Ausschnitt eines zweiten Ausführungsbeispiels einer derart ausgebildeten, erfindungsgemäßen Turbomaschine 20 im Längsschnitt mit einem erfindungsgemäßen Leitschaufelblatt 24, bei welchem die Leitschaufeln 34 des Stators sowohl im Bereich des radial inneren Schaufelblattendes EI als auch im Bereich des radial äußeren Schaufelblattendes EA jeweils ein erstes, sich teilweise in axialer Richtung x und in Umfangsrichtung erstreckendes Leitprofil LP 1 sowie ein sich in axialer Richtung x und in radialer Richtung erstreckendes zweites Leitprofil LP2 im Nebenabschnitt NA aufweisen.

Hierdurch können sowohl die verlustbehafteten Strömungen GS und LS im Bereich des äußeren Deckbandes 24B sowie die verlustbehafteten Strömungen GS und LR im Bereich des inneren Deckbandes LR vorteilhaft beeinflusst und insbesondere in Richtung der Hauptströmung HS abgelenkt werden.

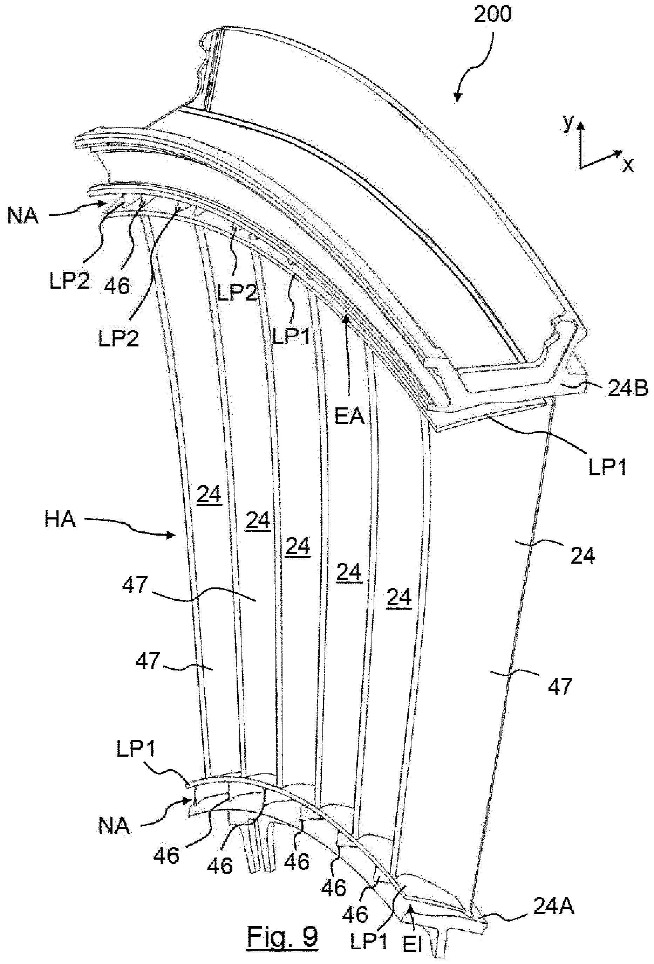

Die Fig. 9 bis 11 zeigen das erfindungsgemäße Leitschaufelsegment 200 mit den erfindungsgemäßen Leitschaufeln 24 aus Fig. 8 in perspektivischer Darstellung sowie verschiedene Details in vergrößerter Darstellung, anhand welcher insbesondere der Unterschied in der Profilgeometrie zwischen dem Hauptprofil 47 im Hauptströmungsabschnitt HA und dem Nebenprofil 46 im Nebenabschnitt NA zu erkennen ist, sowie der durch das innere Deckband 24A und die ersten Leitprofile LP 1 gebildete Nebenströmungskanal im Nebenabschnitt NA sowie die zur Saugseite hin gekrümmten Profilnasen der Nebenprofile 46 gut zu erkennen sind. Ebenso sind die Nebenprofile 46 und die zweiten Leitprofile LP2 im Bereich des radial äußeren Schaufelblattendes EA gut zu erkennen.

In diesem Fall bilden die Nebenprofile 46 der Nebenabschnitte NA der Leitschaufeln 24 zusammen mit den zweiten Leitprofilen LP2 das Strömungsprofil im Nebenkanal, welcher unter anderem durch die äußeren Deckbandsegmente 24A und die ersten Leitprofile LP 1 begrenzt wird. Die einzelnen, einer Schaufel 24 zugeordneten Nebenkanal-Profile, in diesem Fall jeweils ein Nebenprofil 46 sowie ein zweites Leitprofil LP2, bilden dabei ebenfalls, insbesondere im Zusammenspiel mit den jeweiligen Nebenkanal-Profilen 46 und den zweiten Leitprofilen LP2 der Nachbarschaufeln, das gewünschte Strömungsprofil, insbesondere auch mehrere und definierte Einzelkanäle bzw. "Sub-Kanäle" innerhalb des Nebenkanals.

Die Profilgeometrie der Nebenprofile 46 sowie der zweiten Leitprofile LP2 im Nebenkanal ist dabei ebenfalls im Eintrittsbereich an die Richtung der Grenz- und Leckageströmungen angepasst und mit Austrittsbereich an die Richtung der Hauptströmung HS.

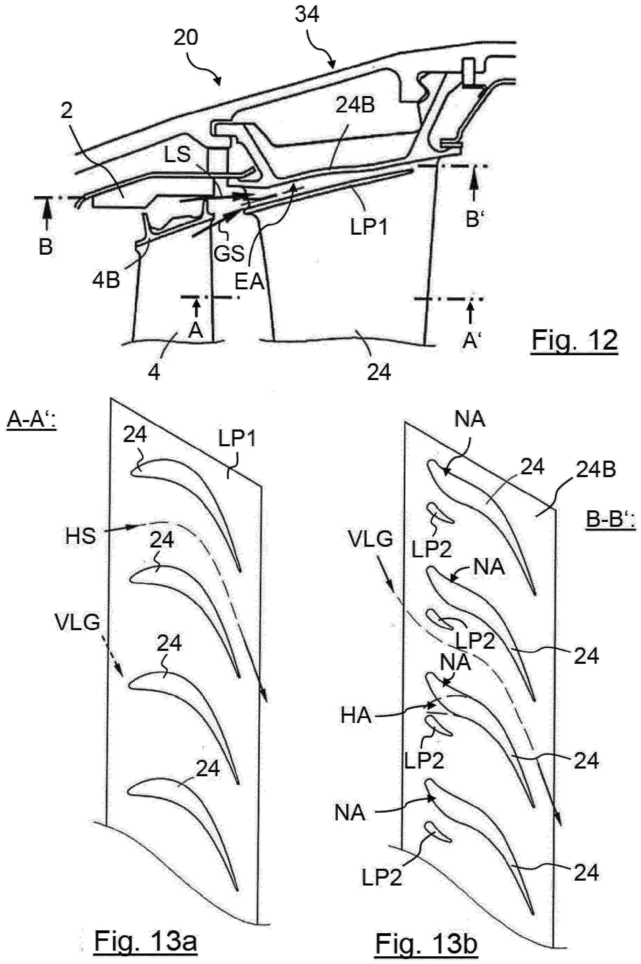

Fig. 12 zeigt einen vergrößerten Ausschnitt der erfindungsgemäßen Turbomaschine 20 aus Fig. 8 im Bereich des radial äußeren Schaufelblattendes EA der Leitschaufel 34. Fig. 13a zeigt den zugehörigen abgewickelten Schnitt durch die Schaufelblätter 24 der erfindungsgemäßen Leitschaufeln 34 aus den Fig. 8 und 12 entlang der Schnittebene A-A' und Fig. 13b den zugehörigen, abgewickelten Schnitt entlang der Schnittebene B-B'.

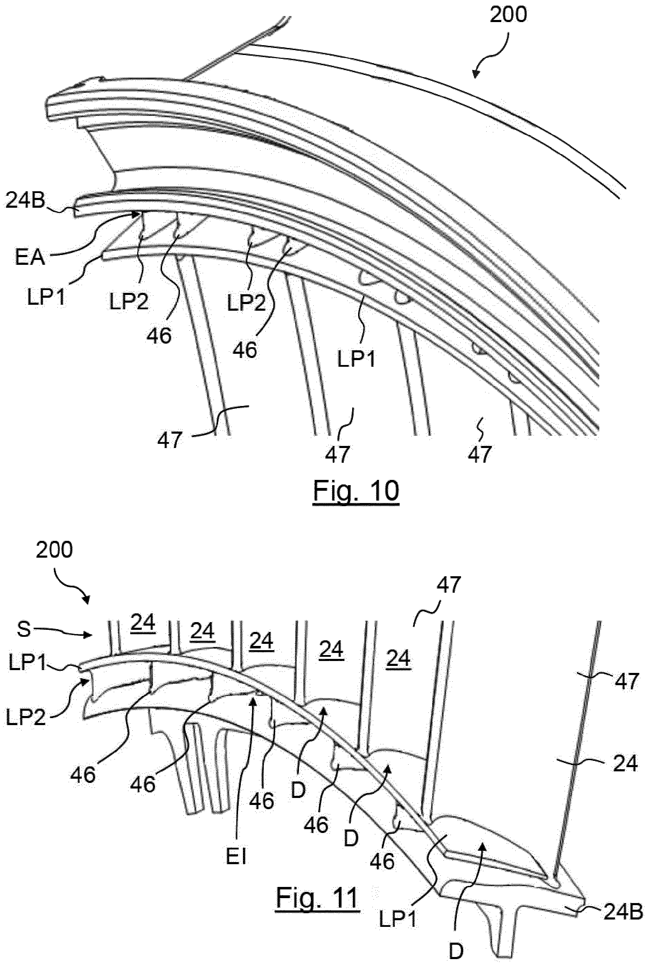

Anhand von Figur 13a, welche einen Querschnitt durch die Profilgeometrien der Schaufelblätter 24 des erfindungsgemäßen Leitschaufelsegments 200 aus den Fig. 8 und 11 im Bereich des Hauptströmungsabschnitts HA zeigt, ist gut erkennbar, dass die Profilgeometrien der Schaufelblätter 24 eine vorteilhaft für die Hauptströmung HS ausgebildete Geometrie aufweisen, wodurch insbesondere ein vorteilhafter Strömungseinlauf zwischen den einzelnen Laufschaufeln 24 ermöglicht wird (vgl. die Pfeilrichtung, welche die Hauptströmungsrichtung HS symbolisiert).

Anhand dieser Darstellung ist ferner gut erkennbar, dass die Schaufelblätter 24 jeweils in Haupt- und Nebenabschnitt HA bzw. NA eine unterschiedliche Geometrie in radialer Richtung y aufweisen sowie im Nebenabschnitt NA eine zur Saugseite S gekrümmte Profilnase und diverse zweite, sich in axialer Richtung und radialer Richtung Erstreckende zweite Leitprofile LP2 aufweisen.

Ebenfalls ist erkennbar, dass die Schaufelblätter 24 im Bereich des Hauptströmungsabschnittes eine zur Druckseite D gekrümmte Profilnase aufweisen. Ebenso sind oberhalb des ersten Leitprofils L1 keine zusätzlichen zweiten Leitprofile LP2 vorhanden.

Die Erfindung ermöglicht die Bereitstellung von Schaufeln, Schaufelsegmenten, Baugruppen sowie Turbomaschinen, mit welchen sich ohne nennenswerte Umgestaltungen im Bereich der Hauptströmung ein verbesserter Wirkungsgrad erreichen lässt, wobei die Wirkungsgradverbesserung insbesondere auf der Minimierung von Strömungsverlusten im Bereich der Schaufelblattenden bzw. im Bereich der Deckbänder beruht.

Die Ausgestaltung einer erfindungsgemäßen Schaufel sowie die Ausgestaltung der einzelnen Profile und Profilabschnitte ist dabei nicht auf die vorbeschriebenen und in den Figuren abgebildeten Ausgestaltungen beschränkt und kann abweichend von den zuvor beschriebenen Ausführungsbeispielen sein. Eine gemäß der vorliegenden Erfindung ausgebildete Schaufel kann in einer alternativen Ausgestaltung wenigstens ein zu den abgebildeten Nebenprofilen 44, 46 alternativ ausgestaltetes Nebenprofil und/oder ein oder mehrere zu den abgebildeten ersten Leitprofilen LP 1 alternativ ausgestaltete erste Leitprofile LP1 und/oder eine oder mehrere zu den abgebildeten zweiten Leitprofilen LP2 alternativ ausgestaltete zweite Leitprofile oder kein zweites Leitprofil aufweisen, wobei insbesondere das oder die einer Schaufel zugeordneten Profile bzw. Profilabschnitte im Endbereich der Schaufel, insbesondere in einem Nebenabschnitt und/oder einem als Nebenkanal vorgesehenen Bereich, dazu ausgestaltet sind, mit dem oder den Profilen wenigstens einer Nachbarschaufel (bezogen auf einen funktionsgemäßen Einbau- bzw. Verwendungszustand der Schaufel(n)) ein definiertes Strömungsprofil, vorzugsweise ein oder mehrere Einzelkanäle und/oder "Sub-Kanäle" innerhalb des Nebenkanals, auszubilden, wobei das oder die einer Schaufel zugeordneten Profile bzw. Profilabschnitte im Endbereich der Schaufel insbesondere dazu ausgestaltet sind, ein Strömungsprofil auszubilden, mittels welchem Strömungsverluste im wandnahen Bereich, insbesondere Grenzschichtströmungsverluste, reduziert werden können.

Obwohl in der Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Beispielen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere im Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Turbomaschine aus dem Stand der Technik
- 2: Gaskanalabdichtung
- 3: Schaufelblatt einer Laufschaufel aus dem Stand der Technik
- 3A, 13A, 23A: inneres Laufschaufel-Deckband
- 3B, 13B, 23B,: äußeres Laufschaufel-Deckband
- 4, 5: Schaufelblatt einer Leitschaufel aus dem Stand der Technik
- 4A, 5A, 24A: inneres Leitschaufel-Deckband
- 4B, 5B, 24B: äußeres Leitschaufel-Deckband
- 10, 20: erfindungsgemäße Turbomaschine
- 13, 23: erfindungsgemäßes Laufschaufelblatt
- 24: erfindungsgemäßes Leitschaufelblatt
- 33: erfindungsgemäße Laufschaufel
- 34: erfindungsgemäße Leitschaufel
- 43, 47: Hauptprofil
- 44, 46: Nebenprofil
- 45: Schaufelfuß
- 100: Teile einer erfindungsgemäßen Baugruppe mit erfindungsgemäßen Laufschaufeln
- 200: erfindungsgemäßes Leitschaufelsegment

- D: Druckseite
- EA: radial äußeres Schaufelblattende
- EI: radial inneres Schaufelblattende
- GS: Grenzschichtströmung
- HA: Hauptströmungsabschnitt
- HS: Hauptströmung
- LP1: erstes, zusätzliches, sich in axialer Richtung und in Umfangsrichtung erstreckendes Leitprofil
- LP2: zweites, zusätzliches, sich in axialer Richtung und in radialer Richtung erstreckendes Leitprofil

- LR: Leckageströmung (Kühl- und Sperrluftströmung)
- LS: Leckageströmung (Spaltströmung)
- NA: Nebenabschnitt
- S: Saugseite
- VLG: Strömungsrichtung der Sekundärströmung (Grenzschichtströmung)
- x: axiale Richtung
- y: radiale Richtung

## Patentansprüche

1. Schaufel (33; 34) für eine Turbomaschine (10, 20), insbesondere Laufschaufel (33) oder Leitschaufel (34), insbesondere für eine Gasturbine insbesondere für ein Flugtriebwerks, insbesondere für eine Turbinenstufe einer Gasturbine, wobei die Schaufel (33; 34) ein Schaufelblatt (13, 23; 24) aufweist mit einem Schaufelblattprofil und einem radial inneren Schaufelblattende (EI) und einem radial äußeren Schaufelblattende (EA), wobei
die Schaufel (33; 34), insbesondere das Schaufelblatt (13, 23; 24), zusätzlich zum Schaufelblattprofil wenigstens ein im Bereich des radial inneren (EI) und/oder des radial äußeren Schaufelblattendes (EA) und in radialer Richtung beabstandet zum zugehörigen Schaufelblattende (EI, EA) angeordnetes und sich wenigstens teilweise in axialer Richtung (x) und wenigstens teilweise in Umfangsrichtung und/oder in tangentialer Richtung erstreckendes erstes Leitprofil (LP 1) aufweist, wobei das Schaufelblattprofil einen Hauptströmungsabschnitt (HA) mit einem Hauptprofil (43, 47) und einer Hauptprofilgeometrie und wenigstens einen Nebenabschnitt (NA) mit einem Nebenprofil (44, 46) und einer Nebenprofilgeometrie aufweist, **dadurch gekennzeichnet, dass** das Nebenprofil (44, 46) wenigstens eines Nebenabschnitts (NA) eine zur Saugseite (S) des zugehörigen Hauptprofilabschnitts (HA) gekrümmte Profilvorderkante und/oder in Strömungsrichtung einen S-Schlag aufweist.

2. Schaufel (33; 34) nach Anspruch 1, **dadurch gekennzeichnet, dass** sich wenigstens ein erstes Leitprofil (LP1) ausgehend von der Saugseite (S) oder der Druckseite (D) des Schaufelblattes (13, 23; 24) erstreckt.

3. Schaufel (33; 34) nach Anspruch 1 oder 2, **dadurch gekennzeichnet, dass** die Schaufel (33; 34) wenigstens ein, einen Strömungskanal begrenzendes und mit der Schaufel (33; 34), insbesondere mit einem Schaufelblattende (EI, EA), verbundenes Wandsegment (13A, 23A, 24A; 13B, 23B, 24B) aufweist, insbesondere ein Deckbandsegment (13A, 23A, 24A; 13B, 23B, 24B) oder ein Ringsegment, insbesondere ein inneres Deckbandsegment (13A, 23A; 24A) und/oder ein äußeres Deckbandsegment (13B; 24B), wobei wenigstens ein erstes Leitprofil (LP1) in radialer Richtung beabstandet zum Wandsegment (13A, 23A, 24A; 13B, 23B, 24B) angeordnet ist und sich insbesondere in wenigstens einer Radialebene und in Umfangsrichtung parallel zum Wandsegment (13A, 23A, 24A; 13B, 23B, 24B) erstreckt und/oder konzentrisch zum Wandsegment (13A, 23A, 24A; 13B, 23B, 24B) ausgebildet und angeordnet ist.

4. Schaufel (33; 34) nach einem der vorgenannten Ansprüche, **dadurch gekennzeichnet, dass** das der wenigstens eine Nebenabschnitt (NA) ein Endabschnitt ist und sich in radialer Richtung vom Hauptströmungsabschnitt (HA) bis zum zugehörigen Schaufelblattende (EI, EA) erstreckt.

5. Schaufel (33; 34) nach Anspruch 4, **dadurch gekennzeichnet, dass** das Nebenprofil (44, 46) wenigstens eines Nebenabschnitts (NA), insbesondere wenigstens am zugehörigen Schaufelblattende (EI, EA), wenigstens teilweise, vorzugsweise vollständig, eine von der Hauptprofilgeometrie verschiedene Nebenprofilgeometrie aufweist.

6. Schaufel (33; 34) nach einem der vorhergehenden Ansprüche, **dadurch gekennzeichnet, dass** die Schaufel (33; 34), insbesondere das Schaufelblatt (13, 23; 24), zusätzlich zum Schaufelblattprofil im Bereich des radial inneren (EI) und/oder des radial äußeren Schaufelblattendes (EA) wenigstens ein zweites Leitprofil (LP2) aufweist, wobei sich das zweite Leitprofil (LP2) wenigstens teilweise in axialer Richtung (x) und wenigsten teilweise in radialer Richtung (y) erstreckt und insbesondere in Umfangsrichtung beabstandet zum Schaufelblattprofil angeordnet ist, insbesondere in Umfangsrichtung beabstandet zum Nebenprofil (44, 46).

7. Schaufel (33; 34) nach Anspruch 6, **dadurch gekennzeichnet, dass** das zweite Leitprofil (LP2) eine zur Saugseite (S) des zugehörigen Hauptprofilabschnitts (HA) gekrümmte Profilvorderkante und/oder in Strömungsrichtung einen S-Schlag aufweist.

8. Schaufelsegment (200) für eine Turbomaschine, insbesondere Laufschaufelsegment oder Leitschaufelsegment (200), insbesondere für eine Gasturbine, insbesondere für ein Flugtriebwerk, insbesondere für eine Turbinenstufe einer Gasturbine, wobei das Schaufelsegment (200) wenigstens ein erstes, einen Strömungskanal begrenzendes Wandsegment (13A, 23A, 24A; 13B, 23B, 24B), insbesondere ein Deckbandsegment (13A, 23A, 24A; 13B, 23B, 24B) oder ein Ringsegment, und wenigstens eine Schaufel (33; 34) mit einem Schaufelblatt (13, 23; 24) mit einem Schaufelblattprofil und einem radial inneren Schaufelblattende (EI) und einem radial äußeren Schaufelblattende (EA) aufweist, wobei das radial innere (EI) oder das radial äußere Schaufelblattende (EA) mit dem ersten Wandsegment (13A, 23A, 24A; 13B, 23B, 24B) verbunden ist,**dadurch gekennzeichnet, dass** das Schaufelsegment (200), insbesondere die Schaufel (33; 34), das Schaufelblatt (13, 23; 24) und/oder das Wandsegment (13A, 23A, 24A; 13B, 23B, 24B), zusätzlich zum Schaufelblattprofil wenigstens ein im Bereich wenigstens eines radial inneren (EI) und/oder radial äußeren Schaufelblattendes (EA) und in radialer Richtung beabstandet zum zugehörigen Schaufelblattende (EI) angeordnetes und sich wenigstens teilweise in axialer Richtung (x) und wenigstens teilweise in Umfangsrichtung und/oder in tangentialer Richtung erstreckendes erstes Leitprofil (LP1) aufweist, **dadurch gekennzeichnet, dass** wenigstens eine Schaufel (33; 34) des Schaufelsegmentes (200) nach einem der Ansprüche 1 bis 7 ausgebildet ist.

9. Schaufelsegment (200) nach Anspruch 8, **dadurch gekennzeichnet, dass** wenigstens zwei, sich in Umfangsrichtung erstreckende erste Leitprofile (LP1) in Umfangsrichtung aneinander angrenzen und ein sich in Umfangsrichtung erstreckendes erstes Leitprofilbandsegment bilden, wobei insbesondere sämtliche erste Leitprofile (LP1) ein gemeinsames, insbesondere geschlossenes, sich in Umfangsrichtung erstreckendes erstes Leitprofilbandsegment bilden.

10. Schaufelsegment (200) nach Anspruch 8 oder 9, **dadurch gekennzeichnet, dass** das Schaufelsegment (200), insbesondere die Schaufel (33; 34) und/oder das Wandsegment (13A, 23A, 24A; 13B, 23B, 24B), zusätzlich zum Schaufelblattprofil im Bereich wenigstens eines radial inneren (EI) und/oder radial äußeren Schaufelblattendes (EA) wenigstens ein zweites, zusätzliches Leitprofil (LP2) aufweist, wobei sich das zweite Leitprofil (LP2) wenigstens teilweise in axialer Richtung (x) und wenigstens teilweise in radialer Richtung (y) erstreckt und insbesondere in Umfangsrichtung beabstandet zum Schaufelblattprofil (43, 47; 44, 46) angeordnet ist.

11. Schaufelsegment (200) nach einem der Ansprüche 9 bis 10, **dadurch gekennzeichnet, dass** wenigstens ein zweites Leitprofil (LP2) eine zur Saugseite (S) des zugehörigen Hauptprofilabschnitts (HA) gekrümmte Profilvorderkante und/oder in Strömungsrichtung einen S-Schlag aufweist.

12. Baugruppe (100) für eine Turbomaschine, insbesondere Leitgitter oder Stator oder Laufgitter oder Rotor, insbesondere für eine Gasturbine, insbesondere für ein Flugtriebwerk, insbesondere für eine Turbinenstufe einer Gasturbine, **dadurch gekennzeichnet, dass** die Baugruppe (100) wenigstens eine nach den Ansprüchen 1 bis 7 ausgebildete Schaufel (33; 34) und/oder wenigstens ein nach den Ansprüchen 8 bis 11 ausgebildetes Schaufelsegment (200) aufweist.

13. Turbomaschine (10, 20), insbesondere Gasturbine, insbesondere Flugtriebwerk, mit wenigstens einer Verdichter- oder Turbinenstufe, **dadurch gekennzeichnet, dass** die Turbomaschine (10, 20) wenigstens eine nach den Ansprüchen 1 bis 8 ausgebildete Schaufel (33; 34) und/oder wenigstens ein nach den Ansprüchen 8 bis 11 ausgebildetes Schaufelsegment (200) und/oder wenigstens eine nach Anspruch 12 ausgebildete Baugruppe (100) aufweist.

## Claims

1. Blade (33; 34) for a turbomachine (10,20), in particular a rotor blade (33) or guide vane (34), in particular for a gas turbine, in particular for an aircraft engine, in particular for a turbine stage of a gas turbine, the blade (33; 34) having an airfoil (13, 23; 24) which has an airfoil profile and a radially inner airfoil end (EI) and a radially outer airfoil end (EA), the blade (33; 34), in particular the airfoil (13, 23; 24), in addition to the airfoil profile, having at least one first guide profile (LP1) which is arranged in the region of the radially inner airfoil end (EI) and/or the radially outer airfoil end (EA) and at a distance from the associated blade end (EI, EA) in the radial direction and extends at least in part in the axial direction (x) and at least in part in the circumferential direction and/or in the tangential direction, the airfoil profile having a main flow portion (HA) having a main profile (43, 47) and a main profile geometry and at least one secondary portion (NA) having a secondary profile (44, 46) and a secondary profile geometry, **characterized in that** the secondary profile (44, 46) of at least one secondary portion (NA) has a profile leading edge which is curved toward the suction side (S) of the associated main profile portion (HA), and/or has an S-shape in the direction of flow.

2. Blade (33; 34) according to claim 1, **characterized in that** at least one first guide profile (LP1) extends from the suction side (S) or the pressure side (D) of the airfoil (13, 23; 24).

3. Blade (33; 34) according to eitherclaim 1 or claim 2, **characterized in that** the blade (33; 34) has at least one wall segment (13A, 23A, 24A; 13B, 23B, 24B), in particular a shroud segment (13A, 23A, 24A; 13B, 23B, 24B) or a ring segment, in particular an inner shroud segment (13A, 23A; 24A) and/or an outershroud segment (13B; 24B), which wall segment delimits a flow channel and is connected to the blade (33; 34), in particular to an airfoil end (EI, EA), at least one first guide profile (LP1) being arranged at a distance from the wall segment (13A, 23A, 24A; 13B, 23B, 24B) in the radial direction, and, in particular in at least one radial plane and in the circumferential direction, extending in parallel with the wall segment (13A, 23A, 24A; 13B, 23B, 24B) and/or being formed and arranged concentrically to the wall segment (13A, 23A, 24A; 13B, 23B, 24B).

4. Blade (33; 34) according to any of the preceding claims, **characterized in that** the at least one secondary portion (NA) is an end portion and extends in the radial direction from the main flow portion (HA) to the associated airfoil end (EI, EA).

5. Blade (33; 34) according to claim 4, **characterized in that** the secondary profile (44, 46) of at least one secondary portion (NA), in particular at least at the associated airfoil end (EI, EA), at least in part, preferably completely, has a secondary profile geometry which is different from the main profile geometry.

6. Blade (33; 34) according to any of the preceding claims, **characterized in that** the blade (33; 34), in particular the airfoil (13, 23; 24), in addition to the airfoil profile in the region of the radially inner airfoil end (EI) and/or the radially outer airfoil end (EA), has at least one second guide profile (LP2), the second guide profile (LP2) extending at least in part in the axial direction (x) and at least in part in the radial direction (y) and in particular being arranged at a distance from the airfoil profile in the circumferential direction, in particular at a distance from the secondary profile (44, 46) in the circumferential direction.

7. Blade (33; 34) according to claim 6, **characterized in that** the second guide profile (LP2) has a profile leading edge which is curved toward the suction side (S) of the associated main profile portion (HA) and/or has an S-shape in the direction of flow.

8. Blade segment (200) for a turbomachine, in particular a rotorblade segment or guide vane segment (200), in particular for a gas turbine, in particular for an aircraft engine, in particular for a turbine stage of a gas turbine, the blade segment (200) having at least one first wall segment (13A, 23A, 24A; 13B, 23B, 24B), in particular a shroud segment (13A, 23A, 24A; 13B, 23B, 24B) or a ring segment, which wall segment delimits a flow channel, and at least one blade (33; 34) having an airfoil (13, 23; 24) which has an airfoil profile and a radially inner airfoil end (EI) and a radially outer airfoil end (EA), the radially inne r airfoil end (EI) or the radially outer airfoil end (EA) being connected to the first wall segment (13A, 23A, 24A; 13B, 23B, 24B), **characterized in that** the blade segment (200), in particular the blade (33; 34), the airfoil (13, 23; 24) and/or the wall segment (13A, 23A, 24A; 13B, 23B, 24B), in addition to the airfoil profile, has at least one first guide profile (LP1) which is arranged in the region of at least one radially inner airfoil end (EI) and/or radially outer airfoil end (EA) and at a distance from the associated airfoil end (EI) in the radial direction and extends at least in part in the axial direction (x) and at least in part in the circumferential direction and/or in the tangential direction, **characterized in that** at least one blade (33; 34) of the blade segment (200) is designed according to any of claims 1 to 7.

9. Blade segment (200) according to claim 8, **characterized in that** at least two first guide profiles (LP1) which extend in the circumferential direction adjoin one another in the circumferential direction and form a first guide profile strip segment extending in the circumferential direction, all of the first guide profiles (LP1) in particular forming a common, in particular closed, first guide profile strip segment extending in the circumferential direction.

10. Blade segment (200) according to either claim 8 or claim 9, **characterized in that** the blade segment (200), in particular the blade (33; 34) and/or the wall segment (13A, 23A, 24A; 13B, 23B, 24B), in addition to the airfoil profile in the region of at least one radially inner airfoil end (EI) and/or radially outer airfoil end (EA), has at least one second, additional guide profile (LP2), the second guide profile (LP2) extending at least in part in the axial direction (x) and at least in part in the radial direction (y) and in particular being arranged at a distance from the airfoil profile (43, 47; 44, 46) in the circumferential direction.

11. Blade segment (200) according to any of claims 9 to 10, **characterized in that** at least one second guide profile (LP2) has a profile leading edge curved toward the suction side (S) of the associated main profile portion (HA) and/or has an S-shape in the direction of flow.

12. Assembly (100) for a turbomachine, in particular a guide baffle or stator or rotor cascade or rotor, in particular for a gas turbine, in particular for an aircraft engine, in particular for a turbine stage of a gas turbine, **characterized in that** the assembly (100) has at least one blade (33; 34) designed according to claims 1 to 7 and/or at least one blade segment (200) designed according to claims 8 to 11.

13. Turbomachine (10, 20), in particular a gas turbine, in particular an aircraft engine, comprising at least one compressor stage or turbine stage, **characterized in that** the turbomachine (10, 20) has at least one blade (33; 34) designed according to claims 1 to 8 and/or at least one blade segment (200) designed according to claims 8 to 11 and/or at least one assembly (100) designed according to claim 12.

## Revendications

1. Aube (33 ; 34) pour une turbomachine (10, 20),en particulier aube mobile (33) ou aube de guidage (34), en particulier pour une turbine à gaz, en particulier pour un moteur d'aéronef, en particulier pour un étage de turbine d'une turbine à gaz, l'aube (33 ; 34) présentant une pale (13, 23 ; 24) comportant un profil de pale et une extrémité de pale radialement intérieure (EI) et une extrémité de pale radialement extérie ure (EA), l'aube (33 ; 34), en particulier la pale (13, 23 ; 24), présentant, en plus du profil de pale, au moins un premier profil de guidage (LP1) disposé dans la zone de l'extrémité radialement intérieure (EI) et/ou radialement extérieure (EA) de pale et à distance de l'extrémité de pale (EI, EA) associée dans la direction radiale et s'étendant au moins partiellement dans la direction axiale (x) et au moins partiellement dans la direction circonférentielle et/ou dans la direction tangentielle, le profil de pale présentant une section d'écoulement principale (HA) comportant un profil principal (43, 47) et une géométrie de profil principal et au moins une section secondaire (NA) comportant un profil secondaire (44, 46) et une géométrie de profil secondaire, **caractérisée en ce que** le profil secondaire (44,46) présente au moins une section secondaire (NA) d'un bord d'attaque de profil courbé vers le côté aspiration (S) de la section de profil principale (HA) associée et/ou un profil aérodynamique réfléchi dans la direction d'écoulement.

2. Aube (33 ; 34) selon la revendication 1, **caractérisée en ce qu'**au moins un premier profil de guidage (LP1) s'étend à partirdu côté aspiration (S) ou du côté pression (D) de la pale (13, 23; 24).

3. Aube (33 ; 34) selon la revendication 1 ou 2, **caractérisée en ce que** l'aube (33 ; 34) présente au moins un segment de paroi (13A, 23A, 24A ; 13B, 23B, 24B) délimitant un canal d'écoulement et étant relié à la pale (33 ; 34), en particulier à une extrémité de pale (EI, EA), en particulier un segment de carénage (13A, 23A, 24A ; 13B, 23B, 24B) ou un segment d'anneau, en particulier un segment de carénage interne (13A, 23A ; 24A) et/ou un segment de carénage externe (13B ; 24B), au moins un premier profil de guidage (LP1) étant disposé à distance du segment de paroi (13A, 23A, 24A ; 13B, 23B, 24B) dans la direction radiale, et s'étendant en particulier dans au moins un plan radial et dans la direction circonférentielle parallèlement au segment de paroi (13A, 23A, 24A ; 13B, 23B, 24B) et/ou étant conçu et disposé concentriquement au segment de paroi (13A, 23A, 24A ; 13B, 23B, 24B).

4. Aube (33 ; 34) selon l'une des revendications précédentes, **caractérisée en ce que** l'au moins une section secondaire (NA) est une section d'extrémité et s'étend dans la direction radiale de la section d'écoulement principale (HA) à l'extrémité de pale (EI, EA) associée.

5. Aube (33 ; 34) selon la revendication 4, **caractérisée en ce que** le profil secondaire (44, 46) d'au moins une section secondaire (NA) présente une géométrie de profil secondaire différente de la géométrie de profil principale, en particulier au moins à l'extrémité de pale (EI, EA) associée, au moins partiellement, de préférence complètement.

6. Aube (33 ; 34) selon l'une des revendications précédentes, **caractérisée en ce que** l'aube (33 ; 34), en particulier la pale (13, 23 ; 24), en plus du profil de pale au niveau de l'extrémité radialement intérieure (EI) et/ou de l'extrémité radialement extérieure (EA) de pale, présente au moins un second profil de guidage (LP2), le second profil de guidage (LP2) s'étendant au moins partiellement dans la direction axiale (x) et au moins partiellement dans la direction radiale (y) et en particulier étant disposé à distance du profil de pale dans la direction circonférentielle, en particulier à distance du profil secondaire (44, 46) dans la direction circonférentielle.

7. Aube (33 ; 34) selon la revendication 6, **caractérisée en ce que** le second profil de guidage (LP2) présente un bord d'attaque de profil courbé vers le côté aspiration (S) de la section de profil principal (HA) associée et/ou un profil dynamique réfléchi dans la direction d'écoulement.

8. Segment d'aube (200) pourune turbomachine, en particulier segment d'aube mobile ou segment d'aube de guidage (200), en particulier pour une turbine à gaz, en particulier pour un moteur d'aéronef, en particulier pour un étage de turbine d'une turbine à gaz, le segment d'aube (200) présentant au moins un premier segment de paroi (13A, 23A, 24A ; 13B, 23B, 24B) délimitant un canal d'écoulement, en particulier un segment de carénage (13A, 23A, 24A ; 13B, 23B, 24B) ou un segment d'anneau, et au moins une aube (33 ; 34) comportant une pale (13, 23 ; 24) présentant un profil de pale et une extrémité de pale radialement intérieure (EI) et une extrémité de pale radialement extérieure (EA), l'extrémité radialement intérieure (EI) ou l'extrémité radialement extérieure (EA) de pale étant reliée au premier segment de paroi (13A, 23A, 24A ; 13B, 23B, 24B), **caractérisé en ce que** le segment d'aube (200), en particulier l'aube (33 ; 34), la pale (13, 23 ; 24) et/ou le segment de paroi (13A, 23A, 24A ; 13B, 23B, 24B), en plus du profil de pale, présentent au moins un premier profil de guidage (LP1) disposé dans la zone d'au moins une extrémité radialement intérieure (EI) et/ou radialement extérieure (EA) de pale et à distance de l'extrémité de pale (EI) associée dans la direction radiale et s'étendant au moins partiellement dans la direction axiale (x) et au moins partiellement dans la direction circonférentielle et/ou dans la direction tangentielle, **caractérisé en ce qu'**au moins une aube (33 ; 34) du segment d'aube (200) est conçue selon l'une des revendications 1 à 7.

9. Segment d'aube (200) selon la revendication 8, **caractérisé en ce qu'**au moins deux premiers profils de guidage (LP1) s'étendant dans la direction circonférentielle se rejoignent dans la direction circonférentielle et forment un premier seg ment de bande de profil de guidage s'étendant dans la direction circonférentielle, en particulier tous les premiers profils de guidage (LP1) formant un premiersegment de bande de profil de guidage commun, en particulier de forme fermée, s'étendant dans la direction circonférentielle.

10. Segment d'aube (200) selon la revendication 8 ou 9, **caractérisé en ce que** le segment d'aube (200), en particulier l'aube (33 ; 34) et/ou le segment de paroi (13A, 23A, 24A ; 13B, 23B, 24B), en plus du profil de pale, présentent au moins un second profil de guidage (LP2) supplémentaire dans la zone d'au moins une extrémité radialement intérieure (EI) et/ou radialement extérieure (EA) de pale, le second profil de guidage (LP2) s'étendant au moins partiellement dans la direction axiale (x) et au moins partiellement dans la direction radiale (y) et en particulier étant disposé à distance du profil de pale (43, 47 ; 44, 46) dans la direction circonférentielle.

11. Segment d'aube (200) selon l'une quelconque des revendications 9 à 10, **caractérisé en ce qu'**au moins un second profil de guidage (LP2) présente un bord d'attaque de profil courbé vers le côté aspiration (S) de la section de profil principal (HA) associée et/ou un profil aérodynamique réfléchi dans le sens d'écoulement.

12. Ensemble (100) pour une turbomachine, en particulier grille de guidage ou stator ou grille mobile ou rotor, en particulier pour une turbine à gaz, en particulier pourun moteur d'aéronef, en particulier pour un étage de turbine d'une turbine à gaz, **caractérisé en ce que** l'ensemble (100) présente au moins une aube (33 ; 34) conçue selon l'une des revendications 1 à 7 et/ou au moins un segment d'aube (200) conçu selon l'une des revendications 8 à 11.

13. Turbomachine (10, 20), en particulier turbine à gaz, en particulier moteur d'aéronef, comportant au moins un étage de compresseurou de turbine, **caractérisée en ce que** la turbomachine (10, 20) présente au moins une aube (33 ; 34) conçue selon l'une des revendications 1 à 8 et/ou au moins un segment d'aube (200) conçu selon l'une des revendications 8 à 11 et/ou au moins un ensemble (100) conçu selon la revendication 12.
